(19) Europäisches Patentamt
European Patent Office
Office européen des brevets

(11) **EP 4 050 522 B1**

(12) **EUROPEAN PATENT SPECIFICATION**

(45) Date of publication and mention
of the grant of the patent:
**10.12.2025 Bulletin 2025/50**

(21) Application number: **22158809.8**

(22) Date of filing: **25.02.2022**

(51) International Patent Classification (IPC):
**G06N 3/063** $^{(2023.01)}$     **G06N 3/045** $^{(2023.01)}$
**G06N 3/048** $^{(2023.01)}$

(52) Cooperative Patent Classification (CPC):
**G06N 3/063; G06N 3/045; G06N 3/0464;
G06N 3/048**

(54) **IMPLEMENTATION OF SOFTMAX AND EXPONENTIAL IN HARDWARE**

IMPLEMENTIERUNG VON SOFTMAX UND EXPONENTIAL IN HARDWARE

MISE EN OEUVRE DE SOFTMAX ET EXPONENTIELLE DANS DU MATÉRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2021 GB 202102728**

(43) Date of publication of application:
**31.08.2022 Bulletin 2022/35**

(73) Proprietor: **Imagination Technologies Limited
Kings Langley, Hertfordshire WD4 8LZ (GB)**

(72) Inventors:
• **IMBER, James
St Albans (GB)**
• **CHOUDHURY, Biswarup
Hemel Hempstead (GB)**
• **DIKICI, Cagatay
London (GB)**
• **ATHERTON, Timothy
Chorleywood (GB)**
• **AHMADI, Aria
London (GB)**

(74) Representative: **Elkington and Fife LLP
Prospect House
8 Pembroke Road
Sevenoaks, Kent TN13 1XR (GB)**

(56) References cited:
**EP-A1- 3 572 984     CN-A- 109 165 006
CN-A- 110 610 235     US-A1- 2019 042 922**

• **ALABASSY BASSMA ET AL: "A High-Accuracy
Implementation for Softmax Layer in Deep
Neural Networks", 2020 15TH DESIGN &
TECHNOLOGY OF INTEGRATED SYSTEMS IN
NANOSCALE ERA (DTIS), IEEE, 1 April 2020
(2020-04-01), pages 1 - 6, XP033766180, DOI:
10.1109/DTIS48698.2020.9081313**

## Description

BACKGROUND

Softmax is a common operation in neural networks, often used where a discrete probability is needed. It is also used in some cases to normalise a tensor so that all elements along a certain axis or axes are strictly in the range [0,1] and sum to 1. The challenge of implementing a softmax layer in a neural network is that it is a relatively complicated operation with several steps.

A softmax layer performs, for any value $x_j$ in a set or vector of values, the operation:

$$s(x_j) = \frac{e^{x_j}}{\sum_i e^{x_i}}$$

In order to drop the subscript notation, this equation can be rewritten in terms of a vector x:

$$s(x) = \frac{e^x}{\sum_{z \in x} e^z}$$

Softmax maps input values in the range (-∞, +∞) to outputs in the range [0,1]. Furthermore, the sum of the output values is 1 (as required for a discrete probability distribution).

It is known that the evaluation of a softmax layer may suffer from numerical instability problems if the input values x are large in magnitude. The input **x** may have such large positive values that overflow occurs in the output of the exponential $e^x$, or such large negative values that underflow occurs. Even when overflow does not occur, with large values of x, some of the exponential values $e^x$ may be so large in comparison with others that the normalisation is no longer reliable.

A solution to at least some of these issues is to subtract the maximum value from all values in the tensor (or vector) **x:**

$$s(x) = \frac{e^{x-M}}{\sum_{z \in x} e^{z-M}}$$

Where $M = \max(x)$. This redefined layer is identical to the definition above but is more stable numerically. The subtraction of the maximum reduces the range of the input from (-∞, +∞) to (-∞, 0], but does not affect the result.

Traditionally, a softmax layer has often been used as the final layer of a neural network used for classification - for example, image classification. Here, the softmax layer would produce a vector of probabilities, each value in the vector representing the probability (as estimated by the neural network) that the image belonged to a respective class from a set of mutually exclusive classes. Softmax is often applied over the channel dimension of a 4D tensor with dimensions for batch, height, width and channels, but the present disclosure is not limited to this usage.

It is becoming increasingly common to implement neural networks on specially adapted hardware accelerators, known as neural network accelerators (NNAs). These devices - usually integrated circuits - are typically specialised at evaluating the most computationally intensive operations encountered when using a neural network for inference. For example, a neural network accelerator may include a plurality of convolution engines, which are specialised at evaluating convolutional layers.

US 2019/0042922 discloses a system and method for implementing activation functions leveraging exponent, log base 2 and antilog base 2 calculations, which are implemented using piecewise linear approximation.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods are disclosed for implementing an exponential operation, and a softmax neural network layer, in neural network accelerator hardware. Also disclosed are a data processing system for implementing the exponential operation and a data processing system for implementing the softmax layer. The exponential operation or softmax layer is mapped to a plurality of elementary neural network operations, and the neural network accelerator hardware evaluates these operations, to produce the result of the operation or layer respectively. It should be understood that the term "exponential operation" is used to refer to an operation implementing the natural exponential function $f(x) = e^x$.

According to one aspect, there is disclosed a method of implementing an exponential operation in a hardware accelerator comprising fixed-function circuitry configured to perform a set of available elementary neural network operations, according to claim 1.

The input to the layer may be a tensor or a vector. Where the input is a tensor, the tensor may have dimensions of batch, channel, height, and width.

The first, second, and/or third LUT may each be implemented by a separate hardware module. Alternatively, two of these LUTs (in particular, the first LUT and second LUT) may be implemented by the same hardware module at different times. For example, a single LUT hardware module may be loaded with values representing a sigmoid function, for evaluating the first lookup, at a first time, and may be loaded with values representing a reciprocal function, for evaluating the second lookup, at a second time. This can increase hardware utilisation, reuse, and flexibility, by re-using the same LUT hardware for different operations.

The representation may comprise or consist exclusively of the plurality of elementary neural network operations.

"Fixed-function", in this context, refers to the property of the hardware that the logic it implements cannot be reconfigured after manufacture (or at least cannot be reconfigured extensively). This is in contrast to field programmable logic, for example, which is reconfigurable. It is also in contrast with general purpose processor hardware, which is fully programmable to implement any (arbitrary) function or algorithm. The hardware accelerator may be comprised in an application specific integrated circuit (ASIC). The behaviour of the fixed-function hardware may be programmable to a limited extent. A fixed-function hardware module may be able to perform its fixed function under the control of a limited set of parameters, for example. Each hardware module may therefore be reconfigurable only in the sense that it can implement, for example, convolution or pooling with various strides and kernel sizes, but it is not fully programmable in the sense that it could execute an arbitrary algorithm.

The plurality of elementary neural network operations implements: a negation, applied to input values, to produce negated input values; a sigmoid function, applied to the negated input values, to produce sigmoid negated values; a reciprocal operation, applied to the sigmoid negated values, to produce reciprocal sigmoid values; and an addition or subtraction, applied to the reciprocal sigmoid values, to subtract a constant from the reciprocal sigmoid values and thereby produce output values of the exponential operation.

The constant may be equal to 1 (unity). The constant may be expressed as a positive number (for example, +1) and subtracted from the reciprocal sigmoid values. Alternatively, the constant may be expressed as a negative number (for example, -1) and added to the reciprocal sigmoid values.

According to this method, the exponential operation can be constructed from elementary operations using the identity

$$e^x = \frac{1}{\sigma(-x)} - 1$$

This representation of the exponential operation consists entirely of operations that can be performed by existing hardware in an exemplary hardware accelerator. The use of the sigmoid function is based on the recognition that this function is related to the exponential operation. This relationship is usually used to evaluate the sigmoid function by first evaluating the exponential function. However, it has been recognised that the relationship can be inverted, to allow the exponential operation to be evaluated by first evaluating the sigmoid function. This can provide a convenient way to evaluate the exponential operation, since the sigmoid function is a common activation function and may therefore already be implemented efficiently in a hardware accelerator.

The negation may be evaluated by an element-wise subtraction operation, using an element-wise operations unit of the hardware accelerator.

The sigmoid function may be evaluated by a first lookup, using an activation unit of the hardware accelerator.

The sigmoid function is a standard choice for an activation function; therefore, a lookup table (LUT) in an exemplary hardware accelerator will commonly offer the ability to implement a sigmoid function.

The reciprocal operation may be evaluated by one of: a second lookup, using an activation unit of the hardware accelerator; a local response normalisation, using an LRN unit of the hardware accelerator; and an element-wise division, using an element-wise operations unit of the hardware accelerator.

Local response normalisation is a commonly used operation in neural networks, for scaling variables. The LRN is a computationally complex function; however, the inventors have realised that, by choosing the parameters of the function carefully, the LRN can be simplified and exploited to implement a reciprocal. Alternatively, reciprocals may be programmed into a lookup table (if the hardware and software implementation allows this flexibility).

In some embodiments, the reciprocal operation and the sigmoid function may be combined in the third lookup. For example, the third LUT may contain the function $f(x) = \frac{1}{\sigma(x)}$ . In some of these embodiments, the reciprocal operation and the sigmoid function may be further combined with the first subtraction, which negates the input values. That is, the third LUT may contain the function $f(x) = \frac{1}{\sigma(-x)}$. The third lookup, like the first lookup and the second lookup, may be evaluated using an activation unit of the hardware accelerator.

The addition or subtraction may be evaluated by an element-wise addition or element-wise subtraction, using an activation unit of the hardware accelerator. The activation unit may be configured to add/subtract the same value to/from every element of a tensor.

According to another aspect, there is provided a method of implementing a softmax neural network layer in a hardware accelerator comprising fixed-function circuitry configured to perform a set of available elementary neural network operations, according to claim 2.

The plurality of elementary neural network operations may include at least one function approximation operation, wherein the function approximation operation is implemented as a lookup in an LUT, the LUT optionally comprising one of: a sigmoid function; a reciprocal function; a reciprocal of a sigmoid function; the function $f(z) = 2^z$, where $z$ is a value in the range (0,1) and an exponential function.

If the plurality of elementary neural network operations comprises two or more lookups, then these lookups may be implemented by separate LUTs, in separate hardware modules. Alternatively, they may be implemented by a single LUT hardware module carrying out different lookups at different times. Reuse of a single LUT in this way can improve hardware utilisation.

The plurality of elementary neural network operations may implement: a maximum operation, applied to input values, to obtain the maximum among the input values; a first subtraction, subtracting the maximum from each of the input values, to produce negative-shifted input values; an exponential operation, applied to the negative-shifted input values, to produce exponentiated values; a summation, applied to the exponentiated values, to produce a sum of the exponentiated values; and a division, dividing each of the exponentiated values by the sum of the exponentiated values.

The maximum operation may be evaluated by one of: a max pooling operation, using a pooling unit of the hardware accelerator; and repeated iterations of an element-wise maximum operation, using an element-wise operations unit of the hardware accelerator.

If the softmax layer is to be evaluated over a channel dimension (or batch dimension) of an input tensor, evaluating the maximum operation by means of the max pooling operation may comprise applying a transpose (or permute) operation to the input tensor prior to the max pooling, so that the elements whose maximum is to be calculated are arranged over one or both of a height dimension and a width dimension. This may be beneficial if the pooling unit is specialised at evaluating pooling operations over one or both of these spatial dimensions. A transpose (or permute) operation may be applied after the max pooling, to invert the first transpose and return the dimensions to their original configuration.

If the maximum operation is to be evaluated by means of repeated element-wise maximum operations, the evaluating may comprise splitting the input tensor into two halves, comparing the two halves element-wise by means of an element-wise maximum, and repeating this process until a single unique maximum value (in the relevant dimension or dimensions) is obtained.

The first subtraction may be evaluated by an element-wise subtraction operation, using an element-wise operations unit of the hardware accelerator.

The exponential operation may be mapped to a subset of the plurality of elementary neural network operations, wherein said subset implements: a negation, applied to the negative-shifted input values, to produce negated input values; a sigmoid function, applied to the negated input values, to produce sigmoid negated values; a first reciprocal operation, applied to the sigmoid negated values, to produce reciprocal sigmoid values; and an addition or a second subtraction, applied to the reciprocal sigmoid values, to subtract a constant from the reciprocal sigmoid values and thereby produce output values of the exponential operation.

The component operations of the exponential operation may be implemented as already summarised previously above.

Alternatively, in some embodiments, the exponential operation may be evaluated directly by a lookup in an LUT, using an activation unit of the hardware accelerator.

The summation may be evaluated by a convolution, using one or more convolution engines of the hardware accelerator. The convolution may comprise a convolution with a tensor of ones of the same size as the tensor of exponentiated values in the dimensions over which the sum is to be taken. If the softmax layer is to be applied over the channel dimension, the convolution may be a 1x1 convolution, wherein the kernel has width = height = 1, a number of input channels equal to the number of channels in the tensor of exponentiated values, and a single output channel.

The division may be implemented as a second reciprocal operation and a multiplication.

The multiplication operation may be evaluated by an element-wise multiplication operation, using an element-wise operations unit of the hardware accelerator.

At least one of the first reciprocal operation and the second reciprocal operation may be evaluated by one of: a lookup, using an activation unit of the hardware accelerator; a local response normalisation, using an LRN unit of the hardware accelerator; and an element-wise division, using an element-wise operations unit of the hardware accelerator.

The inventors have recognised that a local response normalisation can be used to calculate reciprocals. By setting the constants $\alpha, \beta = 1$ and $k, n = 0$, the LRN reduces from a complicated normalisation function to one that returns the reciprocal of the input.

One reciprocal operation may be evaluated using the activation unit and the other reciprocal operation may be evaluated by the LRN unit. Alternatively, both reciprocal operations may be evaluated by the activation unit, or both reciprocal operations may be evaluated by the LRN unit.

In some embodiments, the softmax layer is to be applied to input data comprising a first element and a second element, and wherein the plurality of elementary neural network operations implements: at least one subtraction, to obtain at least one difference between the first element and the second element; and a sigmoid function, applied to the at least one obtained difference, to produce an output of the softmax layer.

The first element and second element may be elements of a tensor. The tensor may have a size of 2 in the dimension in which the softmax layer is to be evaluated.

The at least one subtraction may be evaluated by a convolution, using one or more convolution engines of the hardware accelerator. Alternatively, or in addition, the sigmoid function may be evaluated by a function approximation operation, optionally using an activation unit of the hardware accelerator. The function approximation operation may comprise a lookup in an LUT of the activation unit.

Mapping the neural network layer to the representation comprising the plurality of elementary neural network operations optionally comprises: identifying at least two consecutive elementary neural network operations that can be combined; and combining the at least two consecutive elementary neural network operations into a smaller number of elementary neural network operations.

For example, a negation operation may be combined with an addition or subtraction operation. In another example, two consecutive LUT lookup operations could be combined by loading into a single LUT a representation of a single compound function that combines the individual functions that were implemented by the consecutive LUTs.

Also provided is a data processing system for implementing an exponential operation, according to claim 3. The representation may comprise or consist exclusively of the plurality of elementary neural network operations.

Additionally provided is a data processing system for implementing a softmax neural network layer, according to claim 4. Again, the representation may comprise or consist exclusively of the plurality of elementary neural network operations. The function approximation operation may be implemented as a lookup in an LUT.

The hardware accelerator may comprise any one of, or any combination of two or more of: an activation unit, comprising an LUT; a local response normalisation unit, configured to perform a local response normalisation; an element-wise operations unit, configured to apply a selected operation to every pair of respective elements of two tensor of identical size; one or more convolution engines, configured to perform convolution operations; and a pooling unit, configured to perform pooling operations, including (but generally not limited to) max pooling.

Optionally, when the hardware accelerator comprises the activation unit, one or more of the plurality of elementary neural network operations may implement a sigmoid function, and the activation unit may be configured to evaluate the sigmoid function.

Optionally, when the hardware accelerator comprises the local response normalisation unit, one or more of the plurality of elementary neural network operations may implement a reciprocal operation, and the local response normalisation unit may be configured to evaluate the reciprocal operation.

The data processing system may further comprise a memory manipulation module, configured to manipulate data stored in a memory, and the hardware accelerator may comprise a pooling unit, configured to perform pooling operations, including max pooling. The one or more of the plurality of elementary neural network operations may implement a maximum operation, applied to input data over a channel dimension, wherein the memory manipulation module is configured to rearrange the dimensions of the input data to arrange the channel dimension over one or more spatial dimensions, and wherein the pooling unit is configured to evaluate the maximum operation by performing max pooling over the one or more spatial dimensions.

Also provided is a data processing system configured to perform the method of any of claims 1 to 2.

A data processing system may be embodied in hardware on an integrated circuit.

Also provided is a method of manufacturing, using an integrated circuit manufacturing system, a data processing system as summarised above or as claimed in any of claims 3 to 4.

Also provided is a method of manufacturing, using an integrated circuit manufacturing system, a data processing system as summarised above or as claimed in any of claims 3 to 4, the method comprising: processing, using a layout processing system, a computer readable description of the data processing system so as to generate a circuit layout description of an integrated circuit embodying the data processing system; and manufacturing, using an integrated circuit generation system, the data processing system according to the circuit layout description.

Also provided is computer readable code configured to cause a method as summarised above or the method of any of claims 1 to 2 to be performed when the code is run. Also provided is a computer readable storage medium having encoded thereon said computer readable code.

Further provided is an integrated circuit definition dataset that, when processed in an integrated circuit manufacturing system, configures the integrated circuit manufacturing system to manufacture a data processing system as summarised above or as claimed in any of claims 3 to 4.

Additionally provided is a computer readable storage medium (optionally non-transitory) having stored thereon a computer readable description of a data processing system as summarised above or as claimed in any of claims 3 to 4 that, when processed in an integrated circuit manufacturing system, causes the integrated circuit manufacturing system to manufacture an integrated circuit embodying the data processing system or NNA.

Also provided is a computer readable storage medium (optionally non-transitory) having stored thereon a computer readable description of a data processing system as claimed in any of claims 3 to 4 which, when processed in an integrated circuit manufacturing system, causes the integrated circuit manufacturing system to: process, using a layout processing system, the computer readable description of the data processing system so as to generate a circuit layout description of an integrated circuit embodying the data processing system; and manufacture, using an integrated circuit generation system, the data processing system according to the circuit layout description.

Also provided is an integrated circuit manufacturing system configured to manufacture a data processing system as summarised above or as claimed in any of claims 3 to 4.

Also provided is an integrated circuit manufacturing system comprising: a non-transitory computer readable storage medium having stored thereon a computer readable description of a data processing system as summarised above or as claimed in any of claims 3 to 4; a layout processing system configured to process the computer readable description so as to generate a circuit layout description of an integrated circuit embodying the data processing system; and an integrated circuit generation system configured to manufacture the data processing system according to the circuit layout description.

The layout processing system may be configured to determine positional information for logical components of a circuit derived from the integrated circuit description so as to generate a circuit layout description of an integrated circuit embodying the data processing system.

The above features may be combined as appropriate, as would be apparent to a skilled person, and may be combined with any of the aspects of the examples described herein.

## BRIEF DESCRIPTION OF THE DRAWINGS

Examples will now be described in detail with reference to the accompanying drawings in which:

Figure 1A shows a computational graph of a softmax layer;

Figure 1B is a computational graph showing one way of calculating the exponential operation in Figure 1A;

Figure 2 is a block diagram of a hardware accelerator according to an example of the present disclosure;

Figure 3 is a block diagram of a convolution engine as used in Figure 2;

Figure 4 is a block diagram of a data processing system according to an example, for implementing a softmax layer or an exponential operation;

Figure 5 is a block diagram of the memory manipulation module in Figure 4;

Figure 6A is a flowchart illustrating a method of implementing an exponential operation in a hardware accelerator, according to an example;

Figure 6B is a flowchart illustrating a method of implementing a softmax layer in a hardware accelerator, according to an example;

Figure 7A illustrates a maximum operation;

Figure 7B is a computational graph illustrating one approach for implementing the maximum operation of Figure 7A;

Figure 7C shows a way of determining the maximum of a tensor by successive element-wise comparisons;

Figure 7D shows another example of determining a maximum by successive element-wise comparisons;

Figure 8 is a computational graph illustrating an alternative approach for implementing the maximum operation of Figure 7A;

Figure 9A illustrates a summation operation;

Figure 9B is a computational graph illustrating one way in which the summation operation of Figure 9A can be mapped to an elementary neural network operation;

Figure 10A illustrates a division operation;

Figure 10B is a computational graph illustrating one way in which the division operation of Figure 10A can be mapped to elementary neural network operations;

Figure 10C is a computational graph illustrating an alternative way in which the division operation of Figure 10A can be mapped to elementary neural network operations;

Figure 11A is a computational graph illustrating one way in which a softmax layer can be evaluated using a plurality of elementary neural network operations, according to an example;

Figure 11B is a computational graph illustrating an alternative way in which a softmax layer can be evaluated using a plurality of elementary neural network operations, according to another example;

Figure 12 is a computational graph illustrating a further alternative way in which a softmax layer can be evaluated using a plurality of elementary neural network operations, according to one special case;

Figure 13 shows a computer system in which a data processing system is implemented; and

Figure 14 shows an integrated circuit manufacturing system for generating an integrated circuit embodying a data processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Faced with a desire to implement a softmax layer in a system using a neural network accelerator (NNA), one possibility would be to design a dedicated fixed-function hardware module that is specialised at evaluating softmax layers. This hardware module could then be included in the NNA, where it would take responsibility for evaluating any softmax layers, as needed.

Another alternative would be to evaluate softmax layers in general purpose hardware outside the NNA, such as a general purpose CPU or DSP.

Providing a dedicated fixed-function hardware module in an NNA, to handle the evaluation of softmax layers, may allow for an optimised, fast evaluation. However, it has the drawback that the dedicated fixed-function hardware module occupies additional area in the integrated circuit. Moreover, because the evaluation of softmax layers typically represents a small part of the workload of the NNA, the utilisation of the dedicated fixed-function hardware module will be low for most typical neural networks. In other words, the dedicated fixed-function softmax module will be inactive most of the time.

Meanwhile, evaluating softmax layers in general purpose hardware allows for flexibility, and avoids leaving large areas of the NNA underutilised; however, it is typically less efficient, because the hardware is less specialised.

The configurability of general purpose hardware incurs a cost in power and area because: (i) additional logic is required to route the data flexibly; (ii) computational elements cannot be as specialised, meaning that computational density is generally not as high as for fixed-function hardware; and (iii) it is harder to balance the bandwidth and compute requirements of the hardware. Dedicated hardware can be more efficient because it is designed such that it does not include any more functionality than is strictly necessary for the task at hand.

Additionally, when using general-purpose hardware that is external to the NNA, there is an overhead in transferring the necessary data from the NNA to the general-purpose hardware (for example, CPU). This typically involves the NNA writing the data to a memory, and the CPU reading the data from the memory, before evaluating the softmax layer. This is likely to slow down the evaluation of the layer, especially if - as is often the case - the speed of memory access dominates. Furthermore, CPU time is often at a premium due to the requirements of the operating system and other processes being run. Spending CPU time evaluating the softmax layer can cause these other processes to slow down and is an inefficient use of resources. The same is also true for GPUs and DSPs.

The performance penalty incurred by using an external CPU to evaluate the softmax layer might be mitigated when this layer is the final layer of the neural network. In this case, the output of the softmax layer does not need to be transferred back to the NNA for further processing. However, this still consumes host CPU time (potentially in considerable quantities, especially at high inference rates). Moreover, in some recent attention based neural networks, it is becoming more common to include softmax layers as intermediate layers within the neural network. This means that the output data of the softmax layer needs to be transferred back to the NNA for further processing. A softmax layer within a neural network may also have larger input and output tensors than a typical softmax layer at the output of the neural network. This increase in the size of the data increases the memory bandwidth required, and therefore increases the performance penalty for using an external CPU to evaluate the layer. Increasing the bandwidth used also has the effect of increasing power consumption.

Still another alternative would be to include one or more general programmable units, such as a CPU or digital signal processor (DSP), within the NNA itself. This would in one sense be a hybrid of the two possible solutions mentioned above. It would avoid the need to consume system bandwidth in order to hand over the evaluation of each softmax layer to an external general-purpose processor; however, it would have the disadvantages of increased hardware/software complexity, increased power consumption and greater integrated circuit area occupied.

It would be desirable to implement softmax layers within an NNA, but without the need to add a dedicated hardware unit, or additional general-purpose hardware, to the NNA architecture for this purpose. However, until now, it has not been apparent how a relatively complex softmax layer could be evaluated by the relatively limited set of operations that an exemplary NNA is adapted to perform. Unlike the operations performed by a CPU, the operations performed by an NNA are not designed to be a flexible or complete set of general purpose operations. Instead, each neural network operation is specialised to perform a particular computationally intensive neural network calculation quickly and efficiently. The trade-off is that an NNA has a very limited capacity to perform functions beyond this specialised set. For this reason, it is challenging to repurpose existing neural network operations to evaluate softmax layers.

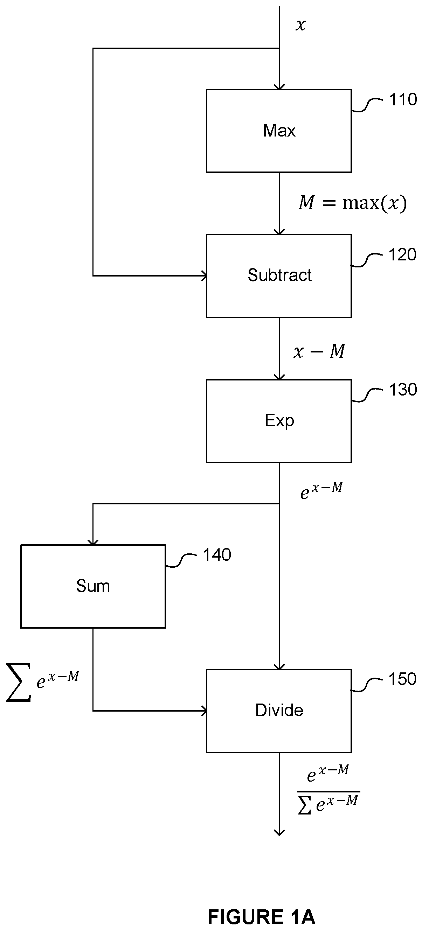

Examples according to the present disclosure provide ways to implement a softmax layer in hardware, based on elementary neural network operations that are available on an exemplary NNA. The softmax layer can be viewed as a computational graph, as shown in Figure 1A, and the individual operations in the graph can each be replaced with one or more operations in the NNA hardware. The graph containing these substituted operations can then be evaluated by the NNA.

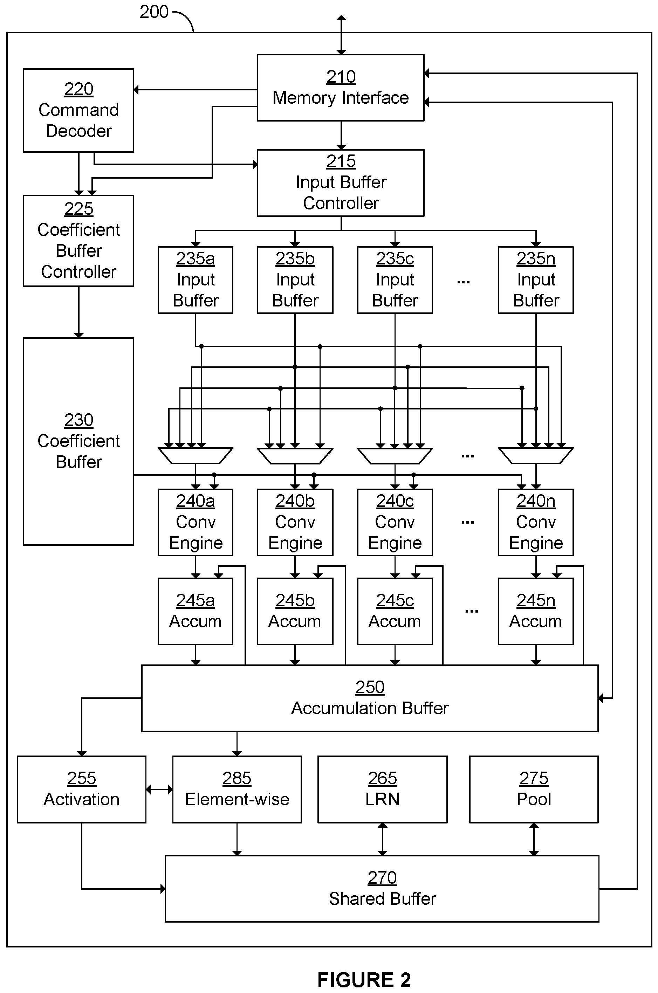

As shown in Figure 2, an exemplary hardware accelerator 200 (also referred to herein as a neural network accelerator or NNA) includes the following fixed-function hardware units:

- A set of convolution engines 240, specialised at convolution operations;
- An element-wise operations unit 285, specialised at performing the same operation to every pair of respective elements of two tensors of corresponding size;
- An activation unit 255, specialised at applying an activation function (which may be selectable, configurable, or fully programmable) to every element of a tensor;
- A local response normalisation (LRN) unit 265 (or normalisation unit, for short), specialised at performing neighbourhood-based normalisation operations; and
- A pooling unit 275, specialised at performing pooling operations, such as max-pooling and min-pooling.

Examples of the present disclosure use elementary neural network operations, executed by these fixed-function hardware units, to implement a softmax layer. In the present implementation, the calculations are performed in fixed point arithmetic. Experiments have shown that the fixed point implementation is sufficiently accurate that it does not significantly degrade the overall accuracy of the exemplary neural networks tested.

A softmax layer may be constructed from the following operations:

- A maximum operation;

- A subtraction;
- An exponential operation implementing the function $f(x) = e^x$;
- A summation; and
- A division.

For each of these operations, there may be more than one way that the operation can be restructured for execution on the hardware accelerator. The operations will be explained in turn in more detail below.

Figure 1A is a computational graph illustrating how the operations available in the exemplary NNA can be used to implement a softmax layer. In this example, an exemplary input tensor x will be considered, the tensor having batch, height, width, and channel dimensions. In this example, it is assumed that the softmax layer is to be evaluated over the channel dimension of the input. It should be understood that the softmax layer could be evaluated over one or more other dimensions, and that it may be applied to tensors with any number of dimensions ordered in any way.

First, the input tensor x undergoes a maximum operation 110. This operation is performed over the dimension or dimensions in which the softmax layer is to be evaluated. In the current example of channel-wise softmax, this operation is performed along the channel dimension. Where the softmax layer is evaluated over a different dimension or dimensions, the maximum operation 110 would instead be performed along that different dimension or dimensions. The maximum operation 110 returns the largest positive value over the relevant dimension(s) within $x$, to produce a tensor of maximum values $M$. In subtraction operation 120, also referred to as the first subtraction, the tensor of maximum values $M$ is subtracted from the respective elements of the tensor $x$. (This can be implemented using broadcasting, as discussed in further detail below). This subtraction operation 120 results in a negative-shifted tensor $x - M$. The negative-shifted tensor is input to an exponential operation 130. This calculation applies each element of the negative-shifted tensor as a power of Euler's number e. The exponential operation 130 results in a tensor of exponentiated values, referred to herein as the exponential tensor $e^{x-M}$. The exponential tensor $e^{x-M}$ undergoes a summation 140. This summation sums all of the elements of the exponential tensor along the dimension or dimensions in which the softmax layer is to be evaluated (in the current example, the channel dimension), resulting in a tensor containing the sum of the exponentiated values $\sum e^{x-M}$. In division operation 150, the exponentiated values are divided by their sum. This returns the output of the softmax layer:

$$\frac{e^{x-M}}{\sum e^{x-M}}.$$

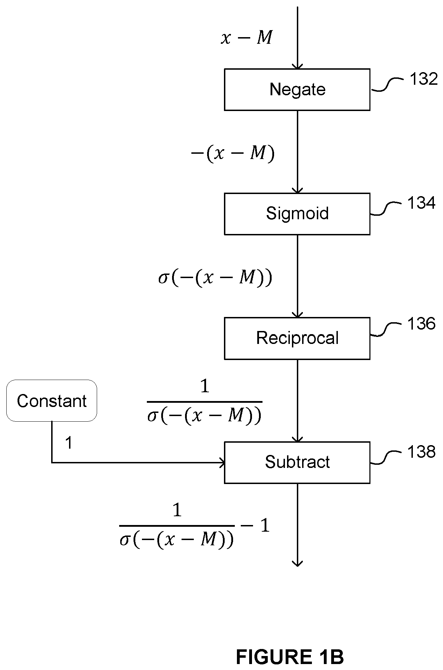

Figure 1B is a computational graph illustrating an example of how the operations available in the exemplary NNA can be used to implement the exponential operation 130. According to this example, the exponential operation 130 consists of the following operations:

- A negation 132;
- A sigmoid function 134;
- A reciprocal operation 136; and
- A second subtraction 138.

Continuing with the example of Figure 1A, the input for the exponential operation 130 is the negative-shifted tensor $x - M$. This tensor undergoes a negation 132 to produce a negated tensor $-(x - M)$. The negation 132 may be implemented in a variety of ways - for example, by subtracting the negative-shifted tensor from 0, or by subtracting the negative-shifted tensor from itself twice. The negated tensor is input to a sigmoid function 134, which determines a sigmoid value for each element of the negated tensor. The output of the sigmoid function 134 is a tensor of sigmoid negated values $\sigma(-(x - M))$. The tensor of sigmoid negated values undergoes a reciprocal operation 136, which determines the reciprocal of each of the sigmoid negated values. The sigmoid operation 136 returns a tensor of reciprocal sigmoid values $\frac{1}{\sigma(-(x-M))}$. Finally, the tensor of reciprocal sigmoid values undergoes a second subtraction 138, to subtract a constant (one) from each element of the tensor. This returns the exponential tensor $\frac{1}{\sigma(-(x-M))} - 1$, which is identical to $e^{x-M}$.

In general, this exemplary method of using the operations available in the exemplary NNA to perform the exponential operation 130 may be used either on its own to evaluate an exponential operation, or as part of an implementation of a softmax layer.

Figure 2 illustrates an exemplary hardware accelerator 200 that is configured to evaluate a plurality of elementary neural network operations according to examples of the present disclosure. The hardware accelerator 200 comprises digital logic circuitry that is configured to receive data (including weights and input tensors) and commands for processing them. The hardware accelerator 200 comprises a memory interface 210, an input buffer controller 215, a command decoder 220, a coefficient buffer controller 225, a coefficient buffer 230, $n$ input buffers 235, $n$ convolution engines 240, $n$ accumulators 245, an accumulation buffer 250, an activation unit 255, a local response normalize (LRN) unit 265, a shared buffer 270, a pooling unit 275, and an element-wise operations unit 285. The hardware accelerator 200 can be used to evaluate elementary neural network operations in order to implement a softmax layer or an exponential operation.

The memory interface 210 is configured to provide an interface between the hardware accelerator 200 and external memory 25. The external memory 25 may be considered as a separate module to the hardware accelerator 200. The command or configuration information may, for example, comprise information regarding weight and data size and format as well as their location in the external memory.

The memory interface 210 is configured to receive, from external memory 25, weights and data to be used in calculations within the neural network, as well as command information to control the operation of the hardware accelerator 200. The received weights (also referred to herein as coefficients) are passed to the coefficient buffer controller 225 and the received data is passed to the input buffer controller 215. The received commands are passed to the command decoder 220, which, in turn, is configured to decode the commands and subsequently issue control information to elements of the hardware accelerator, including the coefficient buffer controller 225 and input buffer controller 215 to control the manner in which the weight and input data is stored in the buffers.

The weights and input data received from external memory via memory interface 210 during a read of the external memory may form the weights and input data for only a portion of a single layer, all of the weights and input data to be used in processing a single layer, or may comprise the weights and input data for processing multiple layers. For example, the weights received from external memory may form the weights of a single layer and the input data received may form only a portion of the input data for a single layer (or vice versa). Any combination of data and weights across one or more layers may be received from external memory 25 in a single read from the memory (for example using a burst read).

In practice, the number of weights and data received in a single read from external memory 25 will depend upon the size of the coefficient buffer 230 and the input buffer 235. The weights are passed from the coefficient buffer controller 225 to the coefficient buffer 230 and the data received is passed from the input buffer controller 215 to a plurality of input buffers 235a-235n. The number of input buffers will depend upon the specific implementation of the accelerator 200 but may take any value. The input data is shared across all of the input buffers 235a-235n. The input buffers each form an effective bank such that the number of input buffers can be increased or decreased depending on the application.

The input buffers 235a-235n are connected to each of a plurality of multiplexers since each convolution engine 240a-240n requires access to all of the effective 'banks' of the input data. The multiplexers are each configured to select an output from one of the input buffers 235 and to pass the values output from the selected input buffer 235 to a respective convolution engine 240a-240n. In addition, weights from the coefficient buffer 230 are provided as a second input into each convolution engine 240a-240n. The convolution engines 240 are configured to perform a convolution calculation on the received input data using the weights received from the coefficient buffer 230. The resultant output of each convolution engine 240a-240n is provided as an input to a respective accumulator of a plurality of accumulators 245a-245n.

Each accumulator 245a-245n is connected to an accumulation buffer 250. The accumulation buffer 250 is configured to store accumulated results received from each accumulator 245a-245n. The accumulation buffer 250 is connected to the memory interface 210. As such, the accumulation buffer 250 is configured to send and receive data to and from external memory 25 via memory interface 210. Specifically, the accumulation buffer 250 is configured to be able to store and restore its values from the external memory 25 via memory interface 210, as will be described in more detail below. The accumulation buffer 250 is connected to the input of the accumulators 245a-245n and is configured to feed values back into the accumulators 245a-245n to enable accumulation calculations to take place.

The accumulation buffer 250 is configured to pass accumulated values to the activation unit 255 and/or the element-wise operations unit 285. The activation unit 255 is configured to perform at least one of a number of different activation functions. The activation unit 255 incorporates a lookup table (LUT), for storing an activation function, such as a sigmoid activation, to be applied to data input to the activation unit. The activation unit 255 is also operable to add/subtract a bias value to/from a tensor. This can be used to add a constant to the tensor or subtract a constant from the tensor.

The resultant value calculated by the activation unit 255 can be passed to be processed by the LRN unit 265 and/or the pooling unit 275 via the shared buffer 270. The LRN unit 265 is configured to perform a local response normalisation. This may be performed within a single plane of input data. Alternatively or in addition, the LRN operation may also be performed across planes.

A result stored in the shared buffer 270 is passed to the memory interface 210, which can either store the result in external memory 25 or pass the result back into the input buffers for further processing without having to first be passed out to external memory.

The shared buffer 270 is configured to buffer values from any one or more of the activation unit 255, the LRN unit 265, the pooling unit 275, and the element-wise operations unit 285 until all the values required to perform the next operation are available. In this way, the shared buffer 270 is used for efficiency of storage as it can hold values required in later operations without having to use external memory 25.

The element-wise operations unit 285 comprises circuitry configured to perform element-wise operations on tensors received from the accumulation buffer 250 and/or activation unit 255. The supported element-wise operations may include element-wise addition, subtraction, multiplication, division, and maximum (or minimum) of the respective elements of the tensors.

Element-wise operations are operations that are repeated for multiple elements of at least one tensor. The operations are typically repeated for all elements of the tensor. Two categories of element-wise operation may be considered: unary operations, having a single operand, and binary operations, having two operands. The element-wise operations unit 285 handles binary element-wise operations. Element-wise operations may also be performed by other components of the hardware accelerator. For example, the activation unit 255 may perform unary element-wise operations, by loading a desired function into the LUT and applying the function to every element of a tensor.

Whilst the hardware accelerator of Figure 2 illustrates a particular order in which the units are arranged and thus how the processing of data flows through the hardware implementation, it will be appreciated that the specific calculations required and the order in which data is processed across layers may vary.

In some examples, the functions performed by the activation 255, LRN 265, pooling 275, and element-wise 285 units may all be performed. In other examples, only some of these functions may be performed and not necessarily in the order set out in the hardware accelerator 200. To achieve a configurable order of processing these functions, each of the activation 255, LRN 265, pooling 275 and element-wise 285 units may be configured to receive control signalling configuring the unit into a bypass mode in which the function is not performed and the input values are simply passed through the unit without change.

In some examples, the data of a particular layer may need to be processed first by the convolution engines 240a-n and then second according to the activation, LRN, pooling, and element-wise units 255, 265, 275, 285. In these examples, the outputs from the convolution engines 240a-n are passed via the accumulators 245a-n to the accumulation buffer 250 and are then passed to activation, LRN, pooling, and element-wise units 255, 265, 275, 285 for further processing. In other examples, the data may need to be processed differently. For example, data may need to be processed first according to the activation, LRN, pooling, and element-wise units 255, 265, 275, 285 and second according to the convolution engines 240a-n.

In these arrangements, data can be passed directly to the activation unit 255 via the accumulation buffer 250, where the accumulation buffer 250 has received the input data directly from the memory interface 210 which has received the data from external memory. In this way, the processing performed by convolution engines 240a-n and accumulator 245a-n is effectively skipped and the data can be passed directly to the activation 255, LRN 265, pooling 275, and element-wise 285 units. Then, once processing using activation, LRN, pooling, and element-wise units 255, 265, 275, 285 is completed, the resultant values can be passed into the input buffer controller 215 via the memory interface 210. In some arrangements, the resultant values can be first passed to external memory 25 via memory interface 210 and then retrieved from external memory 25 before use.

In other arrangements, the memory interface 210 may pass the resultant values to the input buffer controller 215 without passing the values to external memory 25. By avoiding the need to pass the values resulting from calculations using the activation, LRN, pooling, and element-wise unit 255, 265, 275, 285 to external memory 25, memory bandwidth is reduced and therefore the latency in processing the data is also reduced.

Advantageously, since the activation, LRN, pooling, and element-wise units 255, 265, 275, 285 are placed linearly, it is possible to perform these operations back-to-back without having to retrieve data from external memory 25. In some implementations, the order in which the activation, LRN, pooling, and element-wise units 255, 265, 275, 285 are connected may vary. For example, the activation, LRN, and pooling units 255, 265, 275 may be connected in reverse order such that the pooling unit is connected to the accumulation buffer 250 and the activation unit is connected to the memory interface 210.

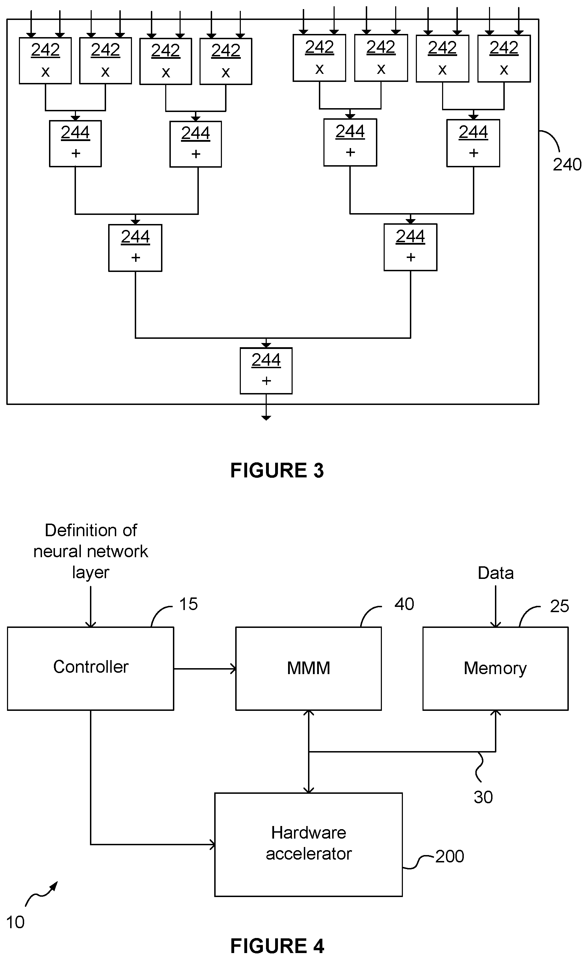

Figure 3 illustrates the structure of each of the convolution engines 240 in Figure 2. The convolution engine 240 comprises a plurality of elements of multiply logic 242, each configured to multiply a weight by an input data element, and a plurality of elements of addition logic 244, configured in a tree structure to sum the outputs of the elements of multiply logic 242.

Figure 4 is a block diagram of a data processing system 10 for implementing a softmax layer or an exponential operation in a hardware accelerator 200 (NNA), according to an example. The data processing system comprises the hardware accelerator 200; a controller 15; a memory 25; and a memory manipulation module (MMM) 40. At least the hardware accelerator 200, the memory 25, and the MMM 40 are connected by a data bus 30. The controller 15 is configured to receive a definition of at least one softmax neural network layer or a neural network layer comprising an exponential operation, and map the layer to a plurality of elementary neural network operations that can be performed natively by the hardware accelerator 200. The controller 15 is further configured to control the hardware accelerator 200 (and if necessary the MMM 40) to evaluate the softmax layer or the layer comprising the exponential operation by means of these elementary operations.

The hardware accelerator 200 is configured to evaluate the plurality of elementary neural network operations. The MMM 40 is configured to manipulate multidimensional data in memory in various ways, including transpose or permute operations that interchange different dimensions of the data. In some examples, the MMM 40 may be configured to transform data by embedding the channel dimension of the data in one or both of the width or height dimensions, or exchanging the channel dimension with one or both of these spatial dimensions. In alternative examples, the MMM may transpose or permute any other combination of the dimensions of the input data, including the batch dimension.

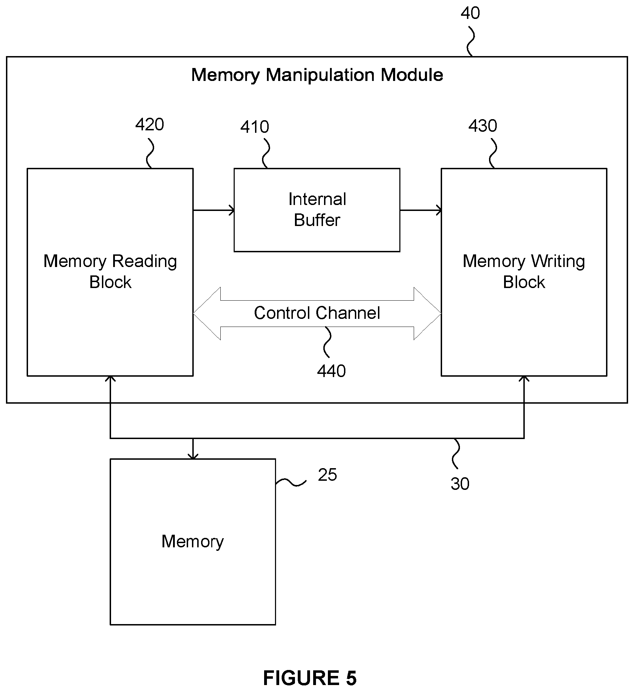

Figure 5 is a block diagram of the MMM 40 used in Figure 4. As mentioned already, the MMM 40 is coupled to the memory 25, via the bus 30. The MMM 40 comprises a memory reading block 420; an internal buffer 410; and a memory writing block 430. A control channel 440 is used to coordinate the operations performed by the memory reading block 420 and the memory writing block 430. Both the memory reading block 420 and the memory writing block 430 are coupled to the bus 30. An output of the memory reading block 420 is coupled to an input of the internal buffer 410. An input of the memory writing block 430 is coupled to an output of the internal buffer 410.

The memory reading block 420 reads data from the memory 25. The memory reading block 420 writes the data (that was read from the memory 25) to the internal buffer 410. The memory writing block 430 reads data from the internal buffer 410 and writes the data (that was read from the internal buffer 410) back to the external memory 25. By the combination of operations performed by the memory reading block 420 and the memory writing block 430, the data may be transformed in the ways previously described. The transformation may occur when moving the data from the memory 25 to the internal buffer 410, or it may occur when moving the data from the internal buffer 410 to the memory 25. In some cases, the transformation may occur in part between the memory 25 and the internal buffer 410, and in part between the internal buffer 410 and the memory 25.

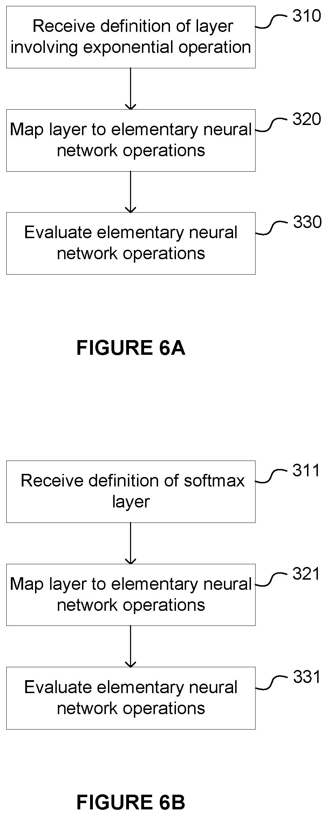

Because the memory reading block 420 and the memory writing block 430 are provided as separate hardware blocks, they are able to operate in parallel. That is, the memory reading block 420 can perform steps 310 and 320 while the memory writing block 230 is performing steps 330 and 340 (the steps are explained in detail below with reference to FIG. 6A and 6B). The control channel 240 provides for communication between the memory reading block 220 and the memory writing block 230, to maintain synchronisation between the two blocks.

Figure 6A is a flowchart illustrating a method performed by the data processing system 10 according an example of the present disclosure. In this example, the data processing system 10 implements an exponential operation.

In step 310, the controller 15 receives as an input a definition of a neural network layer involving an exponential operation. In step 320, the controller maps the layer to an equivalent computational graph comprising a plurality of elementary neural network operations. In step 330, the hardware accelerator 200 evaluates the plurality of elementary neural network operations, to produce the result of the exponential operation. In the present example, the mapping to the plurality of elementary operations is based on the computational graph of Figure 1B, which re-casts the exponential operation in terms of a sigmoid function. This will be described in greater detail below.

Figure 6B is a flowchart illustrating a method performed by the data processing system 10 according to another example of the present disclosure. In this example, the data processing system 10 implements a softmax layer. In step 311, the controller 15 receives as an input a definition of a softmax neural network layer. In step 321, the controller 15 maps the layer to an equivalent computational graph comprising a plurality of elementary neural network operations. In step 331, the hardware accelerator 200 evaluates the plurality of elementary neural network operations, to produce the output of the softmax layer. In the present example, the mapping to the plurality of elementary operations is based on the computational graph of Figure 1A. This will now be described in greater detail.

The softmax layer and exponential operation are mapped to elementary neural network operations based on manipulation of the computational graphs of Figures 1A and 1B. It is convenient to consider each step in each computational graph separately, since there may be several ways to map each step in the graph. In general a particular implementation (consisting of a particular set of one or more elementary operations) can be chosen for each step independently of the others.

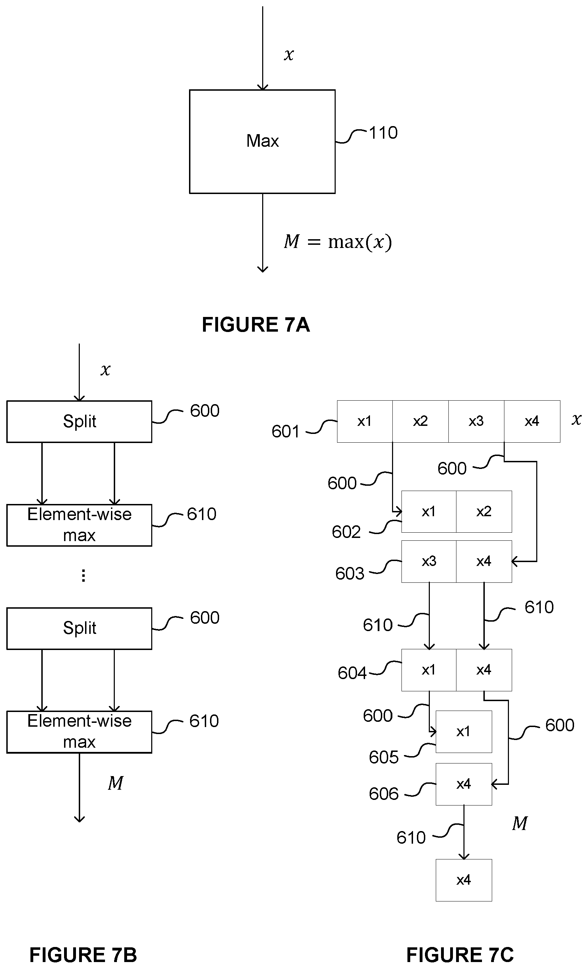

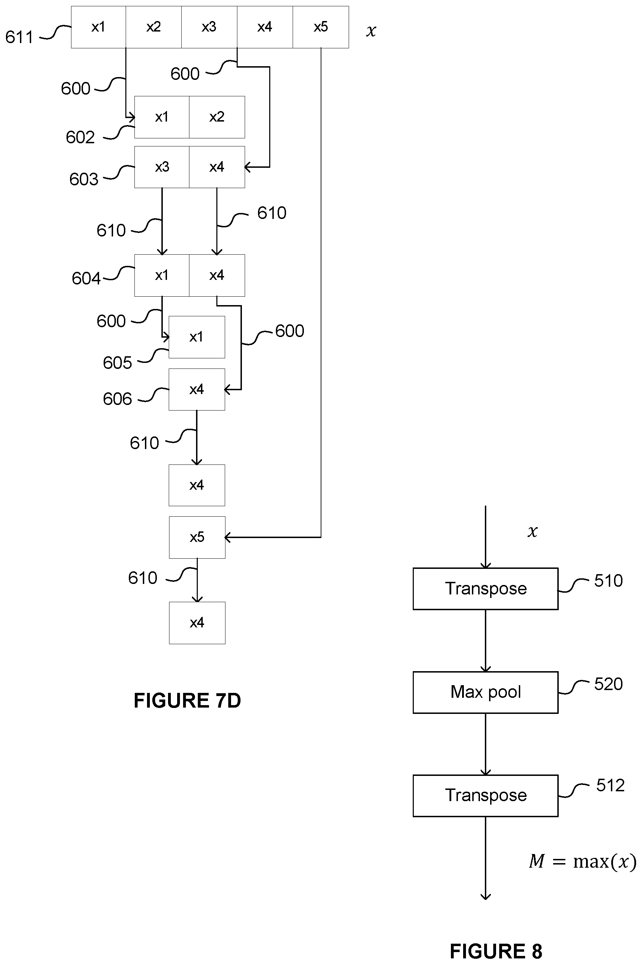

Two possible implementations of the maximum operation 110 will be explained with reference to Figures 7A, 7B, 7C, and 8. As was explained with reference to Figure 1, and as shown again in Figures 7A and 8, the maximum operation 110 receives an input tensor and returns the maximum value of the elements over the channel dimension. The channel dimension is given as an example because softmax is most commonly applied over the channel dimension. However, it should be understood that the scope of the present disclosure is not limited to this example.

The maximum operation 110 can be implemented:

In the pooling unit 275; or
In the element-wise operations (EWO) unit 285.

These units may be assisted by transpose or permute operations performed, for example, in the memory manipulation module 40.

Figure 7B illustrates an implementation of the maximum operation 110 using the EWO unit 285. An iterative sequence of pairwise maximum operations can be used. The input tensor is split 600 in two on the dimension on which we are computing softmax (the channel dimension in the present example), and the two halves are compared using an element-wise maximum operation 610. For each pair of elements compared, the higher (that is, maximum) of the two is output as the result of the element-wise maximum 610. The result of this operation is a tensor that is half the size of the original. This is itself split in two, and the two halves are compared using a further element-wise maximum operation 610. This process continues iteratively, halving the number of values in each iteration, until the overall maximum values over the channel dimension are found. If the tensor does not have a size that is a power of 2, along the dimension over which the maximum operation is to be applied, then padding may be necessary, to increase the size to the nearest power of 2. The tensor could be padded with zeros, in some examples. If the values in the original tensor are all negative, this will cause the maximum operation to instead return a maximum value of zero. Alternatively, for better conditioning of the softmax layer, the padding could be done with a very large negative value, or by copying one or more existing values in the original tensor. This would be less likely to affect the calculation of the maximum. (In the case of one or more copied values or by using the largest representable negative value, it would be guaranteed not to affect the calculation).

Figure 7C illustrates the application of the iterative element-wise maximum approach to an exemplary input tensor - here a vector **"x"** 601, for simplicity. The input vector 601 has 4 channels, each containing a numerical value represented by $x_1$, $x_2$, $x_3$ and $x_4$. First, the vector 601 is split 600 into two sub-vectors 602, 603 each having two elements. Using an element-wise maximum operation 610, the first element of the first sub vector 602 is compared with the first element of the second sub-vector 603. Similarly, the second element of the sub-vector 602 is compared with the second element of the sub-vector 603. This comparison results in a vector 604. In the example of Figure 7C, $x_1 > x_3$ and $x_4 > x_2$; therefore, the vector 604 output by the first element-wise maximum operation consists of $x_1$ and $x_4$. The vector 604 is split 600 to produce a sub-vectors 605 and 606, which are again compared using the element-wise maximum operation 610. This returns the maximum element "M" of the input vector 601 - which, in this example, happens to be $x_4$. While this example used a vector having 4 elements, the process applies in the same fashion to vectors having more elements or to tensors with more dimensions. It can also be applied over dimensions other than the channel dimension.

An alternative to padding is to split the tensor into more than two sub-tensors, each sub-tensor having a size in the relevant dimension that is a power of 2. For example, a tensor with 5 channels may be split into two tensors with 2 channels each and a final tensor with 1 channel. The two tensors with 2 channels can be reduced by splitting and taking the element-wise maximum, as described above. The resulting 1-channel tensors can be compared to produce a tensor with 1 channel. Finally, this tensor can be compared with the remaining tensor with 1 channel, to return the maximum of the original tensor on the channel dimension. This process is illustrated by way of example in Figure 7D. The exemplary input tensor, the vector **"x"** 611, differs from the input in Figure 7C by the addition of a fifth channel, containing a numerical value $x_5$. The first four channels are processed as illustrated in Figure 7C. This is then followed by a final, additional step, in which the maximum over the first four channels, $x_4$, is compared with the fifth channel, $x_5$, in a further element-wise maximum operation 610. The result of this comparison is the overall maximum over the five channels. (In this example, as illustrated, the maximum happens still to be $x_4$).

The splitting operation may be performed by the memory manipulation module 40, by reading data from one location and writing a first part of the data to a first location and a second part of the data to a second location. Alternatively, the splitting might not require a separate operation, and may instead be performed as part of the output of the preceding operation. In the example of Figure 7B, the output of the element-wise maximum 610 may be split by writing a first part of the output to a first location in the memory 25 and a second part of the output to a second location in the memory 25.

Figure 8 illustrates the implementation of the maximum operation 110 using the pooling unit 275. As mentioned at the outset above, in the present example softmax is applied over the channel dimension. Therefore, the maximum operation 110 is also applied over the channels. To facilitate implementing the maximum operation 110 in the pooling unit 275, a transpose or permute operation 510 can be applied to the input tensor before the maximum pooling operation 520 is performed by the pooling unit 275. This is done because, in the exemplary hardware accelerator, the pooling unit is specialised at pooling over spatial dimensions. In order to pool the channel elements of the input, the channel dimension is transposed with one of the spatial dimensions. (This can be done using the MMM 40). Then, the result of the maximum pooling operation 520 can be transformed back to the original dimensions of the input by another transpose or permute operation 512 that inverts the transpose or permute operation 510 to restore the original ordering of the dimensions. (Again, this can be done using the MMM 40). If softmax is being performed in the spatial dimensions (for example, the height and/or width dimensions) then these transpose operations might not be needed. Similarly, where the pooling unit 275 is designed to operate in the channel dimension, transpose operations might not be necessary. In some cases, the pooling unit 275 may have a maximum window size that is smaller than the size of the dimension(s) over which the maximum is to be calculated. If this arises, the max pooling can be iterated a number of times, in order to calculate the maximum over the larger set of values.

The subtractions 120, 138 and the negation 132 can be performed by the element-wise operations unit 285. The element-wise operations unit can perform a respective subtraction operation on each element of a tensor. Where a constant is subtracted - as in the subtraction 138 - the subtraction may be performed either by the element-wise operations unit 285 or by the activation unit 255. Subtraction of a constant (for example, subtraction of 1) can be implemented in the activation unit by loading the function $y = x - c$ into the LUT, where c is the constant to be subtracted. Subtraction of a constant can be implemented as an element-wise addition in the element-wise operations unit, by adding the negative of the constant (for example, adding -1). Similarly, the negation 132 could be performed either by the element-wise operations unit 285 (by subtracting the input tensor from a constant, 0), or by the activation unit 255 (by loading the function y = -x into the LUT).

In the present example, the negation 132 is performed by subtracting each element of the tensor from zero. It could also be performed by element-wise subtraction in other ways - for example, by subtracting the tensor from itself twice, or multiplying every element of the tensor by two and subtracting the result from the original tensor. Alternatively, the negation may be performed by changing the sign bit of each element of the tensor where a sign and magnitude representation of numbers is used. Where a two's complement representation is used, the negation may be performed by inverting all of the bits representing the number and then adding one.

The exponential operation 130 receives an input and raises e to the power of that input. For an input of x, the output of the exponential operation 130 is $e^x$.

The exponential operation could be evaluated:

1. Directly in a lookup table (LUT), in the activation unit 255;
2. By means of a sigmoid function 134, reciprocal 136, negation 132 and subtraction 138 as shown in Figure 1B; or
3. By means of a reciprocal sigmoid function, negation 132 and subtraction 138.

The first implementation is relatively straightforward, provided that the hardware and software of the hardware accelerator allows the LUT to be programmed with the exponential function. However, this might not always be possible. Therefore, the second implementation may be used as an alternative.

The second implementation makes use of the following identity:

$$e^x = \frac{1}{\sigma(-x)} - 1$$

Where $\sigma(-x)$ is the negative sigmoid function. Here, in common with most literature in the field of neural networks, we use the term "sigmoid" synonymously with "logistic function". That is, the sigmoid (logistic) function is defined as:

$$\sigma(x) = \frac{1}{1 + e^{-x}}$$

The negative sigmoid function is therefore:

$$\sigma(-x) = \frac{1}{1 + e^x}$$

The second implementation uses elementary neural network operations to implement the steps shown in Figure 1B. The negation 132 and subtraction 138 can be evaluated by EWO unit 285, as explained above. The sigmoid function 134 can be evaluated by the activation unit 255, as a sigmoid activation. In other words, instead of loading the exponential function into the LUT, the sigmoid function, it is likely to be available natively in the activation unit 255. Thus, in this case. the exponential operation is implemented indirectly by means of a sigmoid activation (together with other elementary operations).

The reciprocal 136 of the value of $\sigma(-x)$ can be evaluated in several ways, depending on the exact capabilities of the hardware accelerator 200. The options for evaluation of a reciprocal include:

A reciprocal lookup in the LUT of the activation unit 255

Using the LRN unit 265; and

An element-wise division, using the EWO unit 285.

In the present example, the reciprocal function is performed using the LRN unit. Each of the three options will be described in greater detail below.

Referring once again to Figure 1B, in principle, the sigmoid function 134 and the reciprocal 136 could be combined, if both are implemented by means of lookups in an LUT. Rather than carry out two lookups in two LUTs, the functions could be combined and a single lookup performed. That is, the LUT of the activation unit 255 could be programmed to contain a reciprocal sigmoid function $f(x) = \frac{1}{\sigma(x)}$. Going one step further, the negation 132 could also be subsumed into the LUT, so that it returns the result of the function $f(x) = \frac{1}{\sigma(-x)}$. In practice, however, it is likely that if the LUT were fully programmable in this way, it would be easier to simply program it with the exponential function.

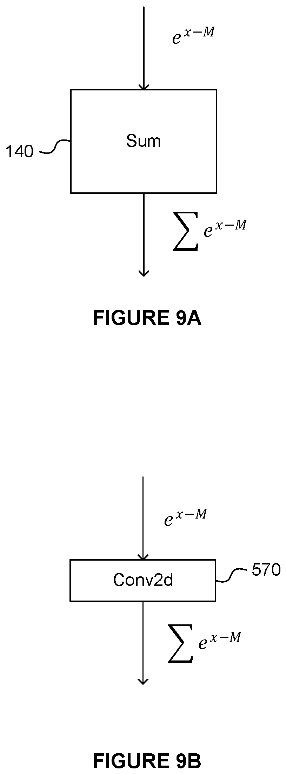

The summation 140, shown in Figure 9A, can be implemented by a 1x1 convolution with a kernel of ones, using the convolution engines 240. The convolution operation 570 is shown in Figure 9B. Using the example of Figure 1, consider the exponential tensor $e^{x\text{-}M}$. This tensor has dimensions B x C x H x W, with B batches, C channels, H rows and W columns. To evaluate a softmax layer over the channel dimension, the elements of the exponential tensor must be summed over the channel dimension. In other words, elements sharing the same height, width and batch location but in different channels will be summed together. This summation 140 is performed by convolving 570 the input tensor with a kernel having dimensions 1 x C x 1 x 1, where the kernel has dimensions O x I x $K_H$ x $K_W$, where I is the number of input channels, O is the number of output channels, $K_H$ is the kernel height and $K_W$ is the kernel width. Each element of the kernel has a value of one. The kernel is convolved 570 across the height, width and batch dimensions of the input tensor. The result of this process is a tensor that contains the summation of the elements of the exponential tensor across the channel dimension.

Where a softmax layer is evaluated over one or more spatial dimensions, a depth-wise convolution may be used, meaning that the kernel is applied to each channel separately. In this case, the kernel would have a size of one in the channel dimension and a size greater than one in the height and/or width dimensions. If the hardware accelerator is limited to a certain maximum kernel size, it may be necessary to iterate the convolution in order to capture all elements of the input tensor, in a similar manner to that described above for the max pooling operation. It should be understood that in other examples, the softmax layer may be evaluated over other combinations of dimensions, such as the channel dimension and one or more spatial dimensions. The convolution kernel will be adapted according to the relevant dimensions.

Alternatively, the summation 140 could be implemented by the EWO unit 285 using iterated pairwise addition operations. This approach is very similar to the element-wise maximum operation explained in relation to Figures 7B and 7C. The difference is that instead of implementing an element-wise maximum operation after each split, an element-wise addition operation is used. Each element of the sub vector produced in this operation is the sum of two respective elements of the vectors on which it operated. The split and addition processes are repeated until all the elements have been summed over the channel dimension. Similarly to the maximum operation of Figures 7B and 7C, it may be necessary to pad the tensor beforehand, so that its size in the relevant dimension is a power of 2 (that is, its size is $2^P$, where P is a positive integer). In this case, because the element-wise operation is addition, the tensor should be padded with zeros. As with the maximum operation, padding may be avoided by instead splitting the input tensor into more than two sub-tensors, each having a size in the relevant dimension that is a power of 2.

The reciprocal 136 can be implemented:

Using the LRN unit 265;
Using the activation unit 255, by loading a reciprocal function into an LUT of the activation unit; or
As an element-wise division, using the element-wise operations unit 285, by dividing a constant, 1, by the input values whose reciprocal is to be calculated.

If the LUT of the activation unit 255 is available, and is programmable, it can be programmed with a reciprocal function $f(x) = 1/x$.

The LRN unit 265 may be used, in particular, if the LUT is not available or if it is not programmable to implement arbitrary functions. The LRN unit 265 is designed to carry out the following LRN calculation:

$$b_{i,x,y} = a_{i,x,y} \Bigg/ \left( k + \alpha \sum_{j=\max(0,i-\frac{n}{2})}^{\min(N-1,i+\frac{n}{2})} (a_{j,x,y})^2 \right)^{\beta}$$

By setting $\alpha = 1$, $\beta = 1$, $k = n = 0$, this function can be reduced to

$$b_{i,x,y} = a_{i,x,y} \Big/ (a_{i,x,y})^2$$

Which is identical to the desired reciprocal:

$$b_{i,x,y} = 1/a_{i,x,y}$$

Either of these two solutions can be used to evaluate reciprocals. Both ways of evaluating reciprocals can also be useful for evaluating division operations, as explained further below. Alternatively, as mentioned above, the reciprocal could itself be implemented by means of an element-wise division, in the element-wise operations unit 285 (assuming that element-wise division is supported).

In the evaluation of the exponential operation as shown in Figure 1B, the reciprocal 136 (for example, implemented by the LRN unit 265) produces a reciprocal tensor $\frac{1}{\sigma(-(x-M))}$, which is passed to the subtraction operation 138 (for example, implemented by element-wise subtraction in the EWO unit 285).

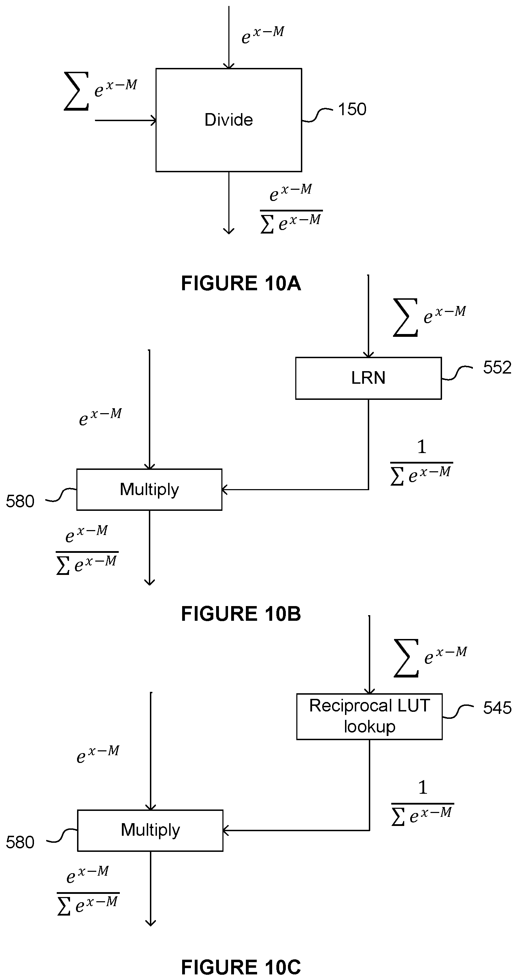

In some examples, division 150 (reproduced in Figure 10A) may be performed directly by means of an element-wise division operation, using the element-wise operations unit 285. However, some hardware accelerators 200 might not support element-wise division. For such eventualities, it is desirable to be able to implement the division in other ways.

Figures 10B and 10C show two alternative ways to implement the division 150 shown in Figure 10A - in particular, if it cannot be performed directly by the EWO unit 285. Both of these approaches exploit the recognition that a division can be evaluated as a combination of a reciprocal operation and a multiplication. In both cases, the multiplication 580 can be performed by the EWO unit 285.

Figure 10B illustrates the use of an LRN operation 552 to evaluate the reciprocal. Using this method, in the context of the example of Figure 1A, the reciprocal of the tensor containing the sum of the exponentiated values $\sum e^{x-M}$ can be evaluated. The reciprocal tensor is passed to the EWO unit 285, where it is multiplied 580 with the exponential tensor $e^{x-M}$, to return the output of the softmax layer.

Figure 10C illustrates an alternative to the method of Figure 10B, in which a reciprocal lookup 545 in the LUT of the activation unit 255 is used instead of the LRN 552 to implement the reciprocal. In some cases, if the activation unit 255 is programmable to implement arbitrary functions, such as the reciprocal function, it may be preferable to use the activation unit 255 to carry out a reciprocal lookup 545 (as shown in Figure 10C) instead of using the LRN unit 265 to perform an LRN operation 552 (as shown in Figure 10B). A lookup may be faster and more energy efficient than an LRN operation once the reciprocal function has been loaded into the LUT.

While examples of the present disclosure have been described using an LUT lookup to approximate one or more of the exponential operation, the sigmoid function and the reciprocal function, this does not have to be the case. Other function approximation operations that do not use an LUT are possible, and may be used to approximate one or more of the exponential operation, the sigmoid function and the reciprocal function. One such example of an alternative type of function approximation is iterative refinement. For example, the exponential operation may be approximated iteratively by calculating the Taylor series expansion of $e^x$.

It should be noted that several of the substitutions outlined above involve substitute operations that are equally as complex as, or more complex than, the operations replaced. This is true of the use of the LRN unit to perform the reciprocal, for example, as well as the implementation of the exponential operation by means of the sigmoid, reciprocal, and subtraction. However, the present inventors have recognised that such substitutions - which at first glance might seem far from optimal - are nevertheless often more attractive than the alternatives of (a) using a CPU or DSP to evaluate softmax layers or (b) implementing a bespoke hardware unit to evaluate softmax layers. This is because the substitutions allow the evaluation to take advantage of the considerable computational power of the dedicated hardware modules. The use of these dedicated modules, even in a relatively "inefficient" manner, can therefore still offer performance gains in terms of power and bandwidth consumption (for example), compared with the alternatives.

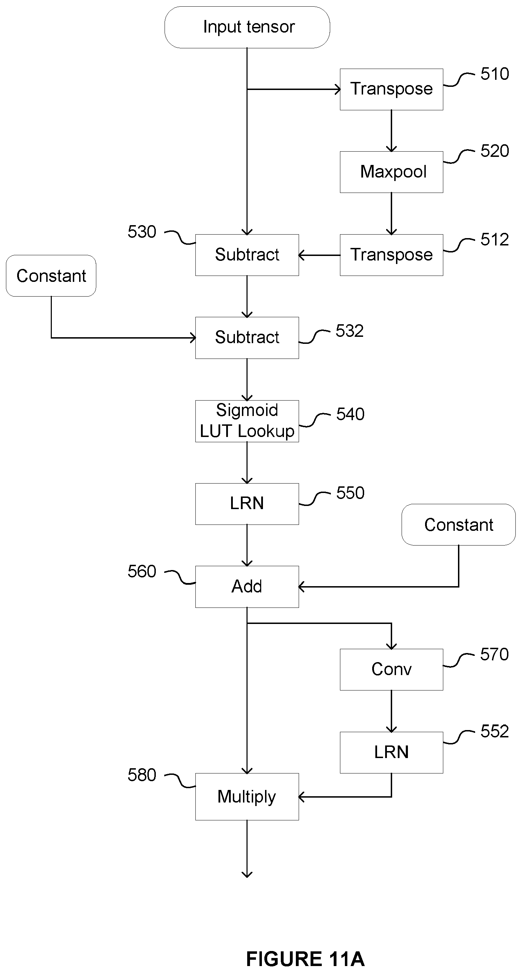

Figure 11A illustrates one example of a full implementation of a softmax layer. In Figure 11A, the various steps in the computational graphs of Figures 1A and 1B have been mapped to elementary neural network operations, in line with the principles described above.

The maximum 110 of Figure 1A is evaluated by a transpose 510 (using the MMM 40), a max pooling 520 (using the pooling unit 275), and a further transpose 512 (using the MMM 40).

The subtraction 120 is evaluated by an element-wise subtraction 530 in the element-wise operations unit 285.

The exponential operation 130 has been replaced by the operations of Figure 1B. In the example of Figure 11A, the sigmoid function 134 is evaluated by a sigmoid activation 540, using a lookup in an LUT of the activation unit 255. The reciprocal 136 is evaluated by an LRN operation 550, using the LRN unit 265. The negation 132 is implemented by an element-wise subtraction 532 (subtracting each element from zero), using the element-wise operations unit 285. The subtraction 138 of the constant (1) is similarly evaluated using the element-wise operations unit 285. This could be done either by addition (of -1) or by subtraction (of +1). In the example illustrated in Figure 11A, an element-wise addition of -1 is adopted.

The summation 140 is evaluated by a convolution 570, using one or more of the plurality of convolution engines 240.

The division 150 is evaluated by an LRN operation 552, using the LRN unit 265, and an element-wise multiplication 580, using the element-wise operations unit 285.

It should be understood that for each step shown in Figure 1A and 1B, any of the described implementations of that step as elementary operations can be used.

In general, when performing element-wise operations where the inputs are tensors of different sizes (like the element-wise subtraction 530 and element-wise multiplication 580), broadcasting is used. The smaller tensor is "broadcast" across the larger tensor, to repeat similar calculations for all corresponding elements of the two tensors. In the element-wise subtraction 530, for example, the original input tensor has dimensions B x C x H x W. The result of the maximum operation 510, 520, 513 has reduced dimensionality B x 1 x H x W, because the maximum was calculated over the channel dimension. Broadcasting, performed by the element-wise operations unit 285, enables the maximum value in each channel to be subtracted from each individual value in that channel. Broadcasting could also be used - but is not required - for operations involving a tensor and a scalar, like the element-wise subtraction 532. As an alternative to element-wise broadcasting, these tensor-scalar operations may be implemented in the activation unit 255, which always applies an operation uniformly to all elements of the tensor. As explained above, this can be done by loading an appropriate function, such as $y = x - c$, into the LUT of the activation unit.

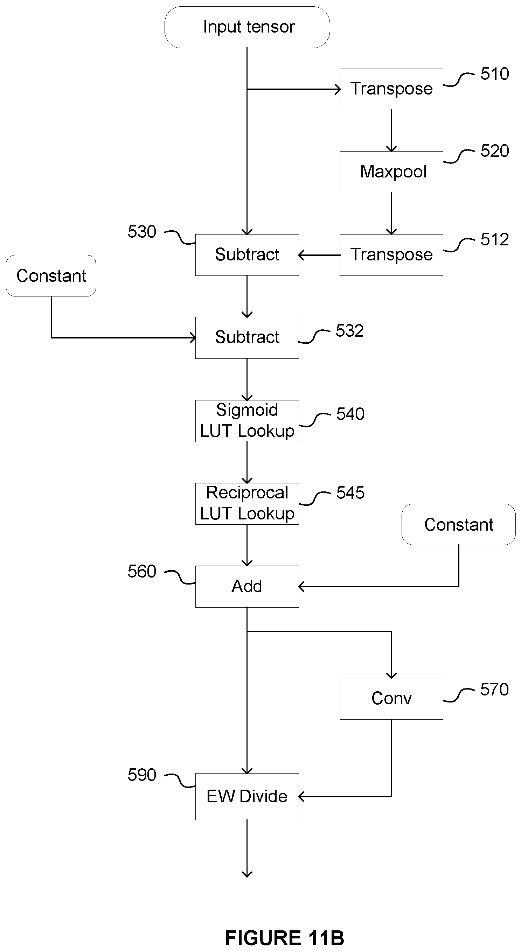

Figure 11B illustrates the modularity and flexibility of the present approach. Comparing Figure 11A with Figure 11B, it can be seen that the LRN operation 550 used to evaluate the reciprocal 136 (as part of the exponential operation 130) has been replaced by a reciprocal LUT lookup 545 in Figure 11B. This LUT lookup is performed using the activation unit 255. Meanwhile, the LRN 552 and multiplication 580, which were used to implement the division 150 in Figure 11A have been replaced by an element-wise division 590 in Figure 11B. This element-wise division 590 is performed by the element-wise operations unit 285.

When using an LUT as part of the evaluation of a softmax layer, whether as part of the exponential operation 130 or for the reciprocal 136, precision may be improved by restricting the range of values loaded into the LUT. Using the example of Figures 11A and 11B, in order to improve the output precision of the sigmoid LUT lookup 540, the LUT may only be loaded with sigmoid values that correspond to an input greater than or equal to zero. This is because, in this example, the input to the LUT is the negated tensor $-(x - M)$. All values of the negated tensor are greater than or equal to zero, so there is no need to load the LUT with sigmoid values corresponding to negative inputs. Instead, the additional memory may be used to store the relevant sigmoid values to a higher precision. This restriction of the LUT output depends on the flexibility of the LUT. In some implementations, the LUT may only be able to provide outputs symmetric about zero - for example, where the LUT uses a two's complement representation of numbers. In this case, restricting the LUT to only contain sigmoid values for positive inputs would only confer a precision benefit where the negative two's complement numbers could be offset to also encode positive values.

In another example, an LUT loaded with exponential values may have its outputs limited in order to improve precision within a desired range. In the example of Figure 1A, the input for the exponential operation is $(x - M)$. All of the values of this input are negative or equal to zero, therefore the output range needs only to span [0,1]. In some implementations, the LUT may represent fixed point numbers in a two's complement representation. This will mean that the ranges of the inputs and outputs of the exponential LUT are symmetric about zero. In order to improve precision in the output range of interest in such implementations, the LUT output range may be restricted to [-1,1]. Output values greater than one can no longer be represented accurately, but this does not matter because these output values are never needed. The benefit of discarding this unwanted part of the output range is much greater precision in the range of interest.

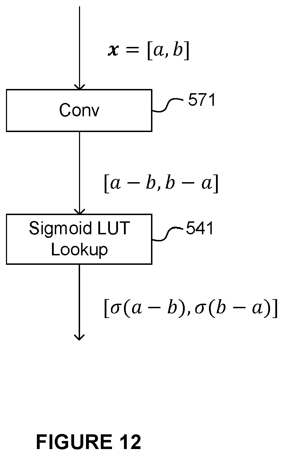

The implementation of a special case of a softmax layer will now be described, with reference to Figure 12. The inventors have recognised that, in the case that the input tensor x contains only two channels, referred to here as "a" and "b" (with any size in the height, width and batch dimensions), the evaluation of the softmax layer over the channel dimension can be simplified in the following way:

$$s([a, b]) = \left[ \frac{e^a}{e^a + e^b}, \frac{e^b}{e^a + e^b} \right] = \left[ \frac{e^{a-b}}{e^{a-b} + e^{b-b}}, \frac{e^{b-a}}{e^{a-a} + e^{b-a}} \right]$$

$$= \left[ \frac{e^{a-b}}{e^{a-b} + 1}, \frac{e^{b-a}}{1 + e^{b-a}} \right] = [\sigma(a - b), \sigma(b - a)]$$

Accordingly, the evaluation of the softmax layer can be broken down into two steps:

The calculation of the differences, (a-b) and (b-a); and
The application of the sigmoid function to each difference.

The first difference, a-b, can be evaluated by convolving the input tensor with a filter [1, -1]. Similarly, the second difference, b-a, can be evaluated by convolving the input tensor with a filter [-1, 1]. These two operations can be carried out by a single convolution operation 571, with two input channels, and two filters (that is, two output channels), with dimensions 2 x 2 x 1 x 1. In other words, just a single call to a convolution routine can evaluate both operations together, using the convolution engines 240.

As an alternative, it will be apparent that each difference is the negative of the other:

$$a - b = -(b - a)$$

Therefore, a first difference could be formed (for example, by convolution or element-wise subtraction), and the second difference could be obtained by negating the first (for example, by changing the sign bit of each value). Nevertheless, in the present example, because of the optimised implementation of the convolution operation in the hardware accelerator, it has been found that using the convolution operation 571 is more efficient.

Having obtained the tensor containing the differences (a-b) and (b-a), a sigmoid activation 541 can be applied by means of a lookup in the LUT of the activation unit 255, as described above. This returns the output of the softmax layer, for this special case.

It will be understood that the examples described above are not limiting, and many variations are possible. For instance, although the examples above have focused on the case of a softmax layer evaluated over the channel dimension, a softmax layer could alternatively be evaluated over any other dimension or combination of dimensions, without limitation. The specific substitutions to map the layer to elementary neural network operations might vary, but the same principles (and same advantages) would apply.

In addition to the examples mentioned above, there may be other ways in which an exponential operation could be implemented in hardware. For example, an exponential operation could be implemented using the relationship $e^x = 2^{kx}$, where $k = \log_2 e$ is a constant. This may be evaluated in two parts: firstly an element-wise multiply, to evaluate the product $kx$, followed by raising 2 to the power of this product. This latter step can be accomplished in two stages. The integer part of the power can be implemented by a bitshift - for example, to raise 2 to the power of 3, a bit may be shifted to the left by three places. The non-integer part of the power - a number in the range (0,1) - can be implemented using an LUT with a further element-wise multiplication to combine this with the integer part of the power.

Alternatively, in some implementations, the hardware accelerator may natively support the operation $2^z$, where $z$ is in general a non-integer value - for example by adding an additional fixed-function unit to handle this elementary operation, in the block diagram of Figure 2. This would allow the exponential operation to be evaluated efficiently and could also be reused for calculations in other neural network layers.

Some optimisations may also be possible. For example, it may be noted that the computational graphs of Figures 11A, 11B and 12 each include two successive subtraction operations 530 and 532. The second subtraction 532 merely negates the result of the first subtraction, to form the negated tensor $-(\boldsymbol{x} - M)$. These two operations could be combined into a single subtraction operation, to be evaluated by a single element-wise subtraction $(M - \boldsymbol{x})$ in the element-wise operations unit 285. Other optimisations could also be found, by examining the computational graph produced by the controller 15 in the mapping step 320, 321. In some embodiments, the mapping step may include the active steps of identifying at least two consecutive elementary neural network operations that can be combined; and combining these consecutive elementary neural network operations into a smaller number of elementary neural network operations.

In the example of Figure 4, the data processing system 10 was constructed around the hardware accelerator 200 - which, in those examples, was an NNA. However, the data processing system may instead be implemented partially or entirely within an NNA. For example, the hardware accelerator 200, the MMM 40, and the controller 15 may represent sub-components within an NNA.

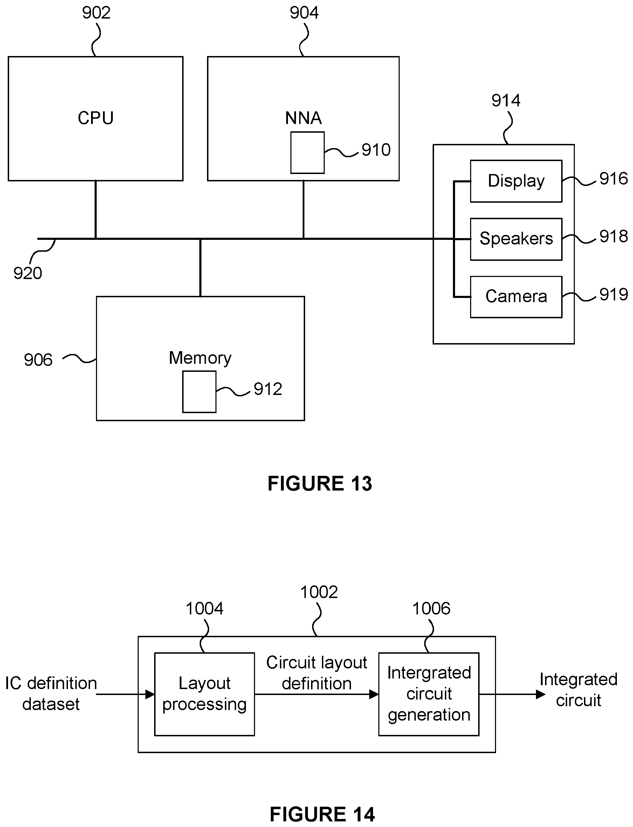

Figure 13 shows a computer system in which the data processing systems described herein may be implemented. The computer system comprises a CPU 902, an NNA 904, a memory 906 and other devices 914, such as a display 916, speakers 918 and a camera 919. A processing block 910 (corresponding to processing blocks 15, 40 and 200) is implemented on the NNA 904. In other examples, the processing block 910 may be implemented on the CPU 902. The components of the computer system can communicate with each other via a communications bus 920. A store 912 (corresponding to memory 25) is implemented as part of the memory 906.

While Figure 13 illustrates one implementation of a neural network accelerator system, it will be understood that a similar block diagram could be drawn for a graphics processing system - for example, by replacing either the CPU 902 or the NNA 904 with a graphics processing unit (GPU), or by adding the GPU as an additional unit. In such cases, the processing block 910 can be implemented in the GPU.

The data processing system of Figure 4 is shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems described herein may be embodied in hardware on an integrated circuit. The data processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java® or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system configured to perform any of the methods described herein, or to manufacture a data processing system comprising any apparatus described herein. An integrated circuit definition dataset may be, for example, an integrated circuit description.

Therefore, there may be provided a method of manufacturing, at an integrated circuit manufacturing system, a data processing system as described herein. Furthermore, there may be provided an integrated circuit definition dataset that, when processed in an integrated circuit manufacturing system, causes the method of manufacturing a data processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a data processing system will now be described with respect to Figure 14.

Figure 14 shows an example of an integrated circuit (IC) manufacturing system 1002 which is configured to manufacture a data processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a data processing system as described in any of the examples herein), process the IC definition dataset, and generate an IC according to the IC definition dataset (e.g. which embodies a data processing system as described in any of the examples herein). The processing of the IC definition dataset configures the IC manufacturing system 1002 to manufacture an integrated circuit embodying a data processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a data processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 14 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 14, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

### Claims

1. A method of implementing an exponential operation by a hardware accelerator comprising fixed-function circuitry configured to perform a set of available elementary neural network operations, the method comprising:

   receiving (310) a definition of at least one neural network layer comprising the exponential operation;

mapping (320) the neural network layer to a representation comprising a plurality of elementary neural network operations from the set of available elementary neural network operations; and

evaluating (330) the plurality of elementary neural network operations,

wherein each of the plurality of elementary neural network operations is selected from a list consisting of:

an element-wise negation or subtraction operation (532);
an element-wise addition operation (560);
an element-wise division operation (590);
an element-wise bit-shifting operation;
a operation of the form $f(z) = 2^z$;
an element-wise multiplication operation;
a first lookup (540) in a first Lookup table, LUT, wherein the first LUT comprises a sigmoid function;
a second lookup (545) in a second LUT, wherein the second LUT comprises a reciprocal function;
a third lookup in a third LUT, wherein the third LUT comprises a reciprocal of a sigmoid function;
a fourth lookup in a fourth LUT, wherein the fourth LUT comprises a function $f(z) = 2^z$, where $z$ is a value in the range (0, 1);
a local response normalisation (550); and
a convolution operation (570);
wherein the exponential operation is mapped to the plurality of elementary neural network operations which implements:

a negation (132), applied to input values, to produce negated input values, wherein the negation (132) is: evaluated by the element-wise subtraction operation (532), using an element-wise operations unit (285) of the hardware accelerator, or performed by an activation unit (255) of the hardware accelerator by loading the function y=-x into an LUT; or performed by changing a sign bit of each element of the tensor; one of A or B:

A.

a sigmoid function (134), applied to the negated input values, to produce sigmoid negated values, wherein the sigmoid function (134) is evaluated by the first lookup (540) in the first LUT, using the activation unit (255) of the hardware accelerator; and
a reciprocal operation (136), applied to the sigmoid negated values, to produce reciprocal sigmoid values, wherein the reciprocal operation (136) is evaluated by one of:

the second lookup (545) in the second LUT, using the activation unit (255) of the hardware accelerator;
the local response normalisation (550), using a local response normalisation unit (265) of the hardware accelerator; and
the element-wise division operation (590), using the element-wise operations unit (285) of the hardware accelerator; or

B. a reciprocal sigmoid function, applied to the negated input values, to produce reciprocal sigmoid negated values, wherein the reciprocal sigmoid function (134) is evaluated by the third lookup (540) in the third LUT, using the activation unit (255) of the hardware accelerator; and

an addition or subtraction (138), applied to the reciprocal sigmoid values, to subtract a constant from the reciprocal sigmoid values and thereby produce output values of the exponential operation, wherein the addition or subtraction (138) is evaluated by the element-wise addition (560) or element-wise subtraction operation (532), using the activation unit (255) of the hardware accelerator or using the element-wise operations unit (285) of the hardware accelerator; or wherein the addition or subtraction (138) is a subtraction and is evaluated by the convolution operation (570), using one or more convolution engines (240) of the hardware accelerator.

2. A method of implementing a softmax neural network layer by a hardware accelerator comprising fixed-function circuitry configured to perform a set of available elementary neural network operations, the method comprising:

receiving (311) a definition of at least one softmax neural network layer;

mapping (321) the softmax neural network layer to a representation comprising a plurality of elementary neural network operations from the set of available elementary neural network operations; and

evaluating (331) the plurality of elementary neural network operations,

wherein each of the plurality of elementary neural network operations is selected from a list consisting of:

a transpose or permute operation (510, 512);
a max pooling operation (520);
an element-wise maximum operation (610);
an element-wise subtraction operation (530, 532);
an element-wise negation operation;
an element-wise addition operation (560);
an element-wise division operation (590);
an element-wise multiplication operation (580);
an element-wise bit-shifting operation;
an operation $f(z) = 2^z$;
a convolution operation (570);
a function approximation operation, comprising a lookup in any of:

a first Lookup table (LUT) comprising a sigmoid function;
a second LUT comprising a reciprocal function; a third LUT comprising a reciprocal of a sigmoid function;
a fourth LUT comprising the function $f(z)=2^z$, where z is a value in the range (0,1); and
a fifth LUT comprising an exponential function; and

a local response normalisation (550, 552), wherein:

A. the softmax neural network layer is mapped to the plurality of elementary neural network operations, which implements:
a maximum operation (110), applied to input values, to obtain the maximum among the input values, wherein the maximum operation (110) is evaluated by one of:

the max pooling operation (520), using a pooling unit (275) of the hardware accelerator; and
the element-wise maximum operation (610), using an element-wise operations unit (285) of the hardware accelerator;
a first subtraction (120), subtracting the maximum from each of the input values, to produce negative-shifted input values, wherein the first subtraction is evaluated by:

the element-wise subtraction operation (530), using the element-wise operations unit (285) of the hardware accelerator or an activation unit (255) of the hardware accelerator; or
the convolution operation (570), using one or more convolution engines (240) of the hardware accelerator;
an exponential operation (130) implementing the function $f(x)=e^x$, applied to the negative-shifted input values, to produce exponentiated values, wherein the exponential operation is evaluated:

directly by the lookup in the fifth LUT, using the activation unit (255) of the hardware accelerator; or
using the method according to claim 1; or
by using the element-wise multiplication operation (580) to evaluate the product kx using the element-wise operations unit (285) of the hardware accelerator, where $k=\log_2 e$, and raising 2 to the power of the product kx, wherein raising 2 to the power of the product kx is implemented using:

the element-wise bit-shifting operation to evaluate the integer part of the power, the lookup in the fourth LUT to evaluate the non-integer part of the power using the activation unit (255) of the hardware accelerator, and the element-wise multiplication operation (580) using the element-wise operations unit (285) of the hardware accelerator to combine the integer and non-integer parts of the power; or
a fixed-function unit of the hardware accelerator to evaluate the operation $f(z)=2^z$;

a summation (140), applied to the exponentiated values, to produce a sum of the exponentiated values, wherein the summation (140) is evaluated by one of:

iterated pairwise addition operations implemented by the element-wise operations unit (285) of the hardware accelerator; and
the convolution operation (570), using one or more of a plurality of convolution engines (240) of the hardware accelerator; and
a division (150), dividing each of the exponentiated values by the sum of the exponentiated values, wherein the division (150) is evaluated by one of:

the element-wise division operation (590), using the element-wise operations unit (285) of the hardware accelerator;
the local response normalisation (552) using a local response normalization unit (265) of the hardware accelerator, and the element-wise multiplication operation (580) using the element-wise operations unit (285) of the hardware accelerator;
the lookup in the second LUT, using the activation unit (255) of the hardware accelerator, and the element-wise multiplication operation (580) using the element-wise operations unit (285) of the hardware accelerator; or

B. wherein the softmax neural network layer is to be applied to input data comprising a first element and a second element, and wherein the plurality of elementary neural network operations implements:
at least one subtraction, to obtain at least one difference between the first element and the second element, wherein the at least one subtraction is evaluated by one of:

the element-wise subtraction operation (530), using the element-wise operations unit (285) of the hardware accelerator; or
the convolution operation (570), using the one or more convolution engines (240) of the hardware accelerator; and
a sigmoid function, applied to the at least one difference, to produce an output of the softmax layer, wherein the sigmoid function (134) is evaluated by the lookup in the first LUT, using the activation unit (255) of the hardware accelerator.

3. A data processing system (10) for implementing an exponential operation, the system comprising:

a hardware accelerator (200), comprising fixed-function circuitry configured to perform a set of available elementary neural network operations, wherein the hardware accelerator (200) comprises any one of, or any combination of two or more of:

an activation unit (255), comprising an LUT;
a local response normalisation unit (265), configured to perform a local response normalisation;
an element-wise operations unit (285), configured to apply a selected operation to every pair of respective elements of two tensors of identical size; and
one or more convolution engines (240), configured to perform convolution operations; and

a controller (15), configured to:

receive (310) a definition of at least one neural network layer comprising the exponential operation; and
map (320) the neural network layer to a representation comprising a plurality of elementary neural network operations from the set of available elementary neural network operations,

wherein the hardware accelerator (200) is configured to evaluate (330) the plurality of elementary neural network operations, and
wherein each of the plurality of elementary neural network operations is selected from a list consisting of:

an element-wise negation or subtraction operation (532);
an element-wise addition operation (560);
an element-wise division operation (590);

an element-wise bit-shifting operation;
a operation of the form $f(z) = 2^z$;
an element-wise multiplication operation;
a first lookup (540) in a first LUT, wherein the first LUT comprises a sigmoid function;
a second lookup (545) in a second LUT, wherein the second LUT comprises a reciprocal function;
a third lookup in a third LUT, wherein the third LUT comprises a reciprocal of a sigmoid function;
a fourth lookup in a fourth LUT, wherein the fourth LUT comprises a function $f(z) = 2^z$, where $z$ is a value in the range (0,1);
a local response normalisation (550); and
a convolution operation (570);
wherein the exponential operation is mapped to a subset of the plurality of elementary neural network operations implementing:

a negation (132), applied to input values, to produce negated input values, wherein the negation (132) is:

evaluated by the element-wise subtraction operation (532), using the element-wise operations unit (285) of the hardware accelerator, or
performed by the activation unit (255) of the hardware accelerator by loading the function y=-x into an LUT; or
performed by changing a sign bit of each element of the tensor; one of A or B:

A.

a sigmoid function (134), applied to the negated input values, to produce sigmoid negated values, wherein the sigmoid function (134) is evaluated by the first lookup (540) in the first LUT, using the activation unit (255) of the hardware accelerator; and
a reciprocal operation (136), applied to the sigmoid negated values, to produce reciprocal sigmoid values, wherein the reciprocal operation (136) is evaluated by one of:

the second lookup in the second LUT, using the activation unit (255) of the hardware accelerator;
the local response normalisation (550), using the local response normalisation unit (265) of the hardware accelerator; and
the element-wise division operation, using the element-wise operations unit (285) of the hardware accelerator; or

B. a reciprocal sigmoid function, applied to the negated input values, to produce reciprocal sigmoid negated values, wherein the reciprocal sigmoid function (134) is evaluated by the third lookup (540) in the third LUT, using the activation unit (255) of the hardware accelerator; and

an addition or subtraction (138), applied to the reciprocal sigmoid values, to subtract a constant from the reciprocal sigmoid values and thereby produce output values of the exponential operation, wherein the addition or subtraction (138) is evaluated by element-wise addition (560) or element-wise subtraction using the activation unit (255) of the hardware accelerator or using the element-wise operations unit (285) of the hardware accelerator, or wherein the addition or subtraction (138) is a subtraction and is evaluated by the convolution operation (570), using one or more convolution engines (240) of the hardware accelerator.

4. A data processing system for implementing a softmax neural network layer, the system comprising:

a hardware accelerator (200), comprising fixed-function circuitry configured to perform a set of available elementary neural network operations, wherein the hardware accelerator (200) comprises any one of, or any combination of two or more of:

an activation unit (255), comprising a Lookup table (LUT) and/or configured to subtract the same value from every element of a tensor;
a local response normalisation unit (265), configured to perform a local response normalisation;
an element-wise operations unit (285), configured to apply a selected operation to every pair of respective

EP 4 050 522 B1

elements of two tensor of identical size;
a fixed-function unit, configured to perform an operation of the form $f(z)=2^z$;
one or more convolution engines (240), configured to perform convolution operations; and
a pooling unit (275), configured to perform pooling operations, including max pooling;

and a controller (15), configured to:

receive (311) a definition of at least one softmax neural network layer; and
map (321) the softmax neural network layer to a representation comprising a plurality of elementary neural network operations from the set of available elementary neural network operations,

wherein the hardware accelerator (200) is configured to evaluate (331) the plurality of elementary neural network operations, and
wherein each of the plurality of elementary neural network operations is selected from the list consisting of:

a transpose or permute operation (510, 512);
a max pooling operation (520);
an element-wise maximum operation;
an element-wise subtraction operation (530, 532);
an element-wise negation operation;
an element-wise addition operation (560);
an element-wise division operation;
an element-wise multiplication operation (580);
an element-wise bit-shifting operation;
an operation $f(z) = 2^z$;
a convolution operation (570);
a function approximation operation, comprising a lookup in any of:

a first LUT comprising a sigmoid function;
a second LUT comprising a reciprocal function;
a third LUT comprising a reciprocal of a sigmoid function;
a fourth LUT comprising the function $f(z)=2^z$, where z is a value in the range (0,1); and
a fifth LUT comprising an exponential function; and
a local response normalisation (550, 552);
wherein:

A. the softmax neural network layer is mapped to the plurality of elementary neural network operations, which implements:
a maximum operation (110), applied to input values, to obtain the maximum among the input values, wherein the maximum operation (110) is evaluated by one of:

the max pooling operation (520), using the pooling unit (275) of the hardware accelerator; and
the element-wise maximum operation (610), using the element-wise operations unit (285) of the hardware accelerator;
a first subtraction (120), subtracting the maximum from each of the input values, to produce negative-shifted input values, wherein the first subtraction is evaluated by:

the element-wise subtraction operation (530), using the element-wise operations unit (285) of the hardware accelerator or the activation unit (255) of the hardware accelerator; or
the convolution operation (571), using the one or more convolution engines (240) of the hardware accelerator; an exponential operation (130) implementing the function $f(x)=e^x$, applied to the negative-shifted input values, to produce exponentiated values, wherein the exponential operation is evaluated:

directly by the lookup in the fifth LUT, using the activation unit (255) of the hardware accelerator; or
using the method according to claim 1; or
using the element-wise multiplication operation (580) to evaluate the product kx using the element-wise operations unit (285) of the hardware accelerator, where k=log e, and raising 2 2 to the power of the product kx, wherein raising 2 to the power of the product kx is implemented using:

the element-wise bit-shifting operation to evaluate the integer part of the power, the lookup in the fourth LUT to evaluate the non-integer part of the power using the activation unit (255) of the hardware accelerator, and the element-wise multiplication operation (580) using the element-wise operations unit (285) of the hardware accelerator to combine the integer and non-integer parts of the power; or
using the fixed-function unit of the hardware accelerator to evaluate the operation $f(z)=2^z$;
a summation (140), applied to the exponentiated values, to produce a sum of the exponentiated values, wherein the summation (140) is evaluated by one of:

iterated pairwise addition operations implemented by the element-wise operations unit (285) of the hardware accelerator; and
the convolution operation (570), using the one or more convolution engines (240) of the hardware accelerator; and
a division (150), dividing each of the exponentiated values by the sum of the exponentiated values, wherein the division (150) is evaluated by one of:

the element-wise division operation (590), using the element-wise operations unit (285) of the hardware accelerator;
the local response normalisation (552) using the local response normalization unit (265) of the hardware accelerator, and the element-wise multiplication operation (580) using the element-wise operations unit (285) of the hardware accelerator;
the lookup in the second LUT, using the activation unit (255) of the hardware accelerator, and
the element-wise multiplication operation (580) using the element-wise operations unit (285) of the hardware accelerator; or

B. wherein the softmax neural network layer is to be applied to input data comprising a first element and a second element, an wherein the plurality of elementary neural network operations implements:
at least one subtraction, to obtain at least one difference between the first element and the second element, wherein the at least one subtraction is evaluated by one of:

the element-wise subtraction operation (530), using an element-wise operations unit (285) of the hardware accelerator; or
the convolution operation (570), using the one or more convolution engines (240) of the hardware accelerator; and
a sigmoid function, applied to the at least one difference, to produce an output of the softmax layer, wherein the sigmoid function (134) is evaluated by the lookup in the first LUT, using the activation unit (255) of the hardware accelerator.

5. A method of manufacturing, using an integrated circuit manufacturing system, a data processing system as claimed in any of claims 3 to 4, the method comprising:

processing, using a layout processing system, a computer readable description of the data processing system as claimed in any of claims 3 to 4 so as to generate a circuit layout description of an integrated circuit embodying the data processing system as claimed in any of claims 3 to 4; and
manufacturing, using an integrated circuit generation system, the data processing system as claimed in any of claims 3 to 4 according to the circuit layout description.

6. A computer readable storage medium having stored thereon a computer readable description of a data processing system as claimed in any of claims 3 to 4 that, when processed in an integrated circuit manufacturing system, causes the integrated circuit manufacturing system to:

process, using a layout processing system, the computer readable description of the data processing system as claimed in any of claims 3 to 4 so as to generate a circuit layout description of an integrated circuit embodying the data processing system as claimed in any of claims 3 to 4; and
manufacture using an integrated circuit generation system, the data processing system as claimed in any of claims 3 to 4 according to the circuit layout description.

**7.** An integrated circuit manufacturing system comprising:

a non-transitory computer readable storage medium having stored thereon a computer readable description of a data processing system as claimed in any of claims 3 to 4;
a layout processing system configured to process the computer readable description so as to generate a circuit layout description of an integrated circuit embodying the data processing system as claimed in any of claims 3 to 4 and
an integrated circuit generation system configured to manufacture the data processing system as claimed in any of claims 3 to 4 according to the circuit layout description.

**Patentansprüche**

**1.** Verfahren für ein Implementieren einer Exponentialoperation durch einen Hardwarebeschleuniger mit einer Festfunktionsschaltung, die dazu eingerichtet ist, einen Satz verfügbarer elementarer neuronaler Netzwerkoperationen auszuführen, das Verfahren umfassend:

Empfangen (310) einer Definition von mindestens einer neuronalen Netzwerkschicht umfassend die Exponentialoperation;
Zuordnen (320) der neuronalen Netzwerkschicht zu einer Darstellung, umfassend eine Mehrzahl von elementaren neuronalen Netzwerkoperationen aus dem Satz der verfügbaren elementaren neuronalen Netzwerkoperationen; und
Auswerten (330) der Mehrzahl von elementaren neuronalen Netzwerkoperationen,
wobei jede der Mehrzahl von elementaren neuronalen Netzwerkoperationen aus einer Liste ausgewählt ist, bestehend aus:

einer elementweisen Negations- oder Subtraktionsoperation (532);
einer elementweisen Additionsoperation (560);
einer elementweisen Divisionsoperation (590);
einer elementweisen Bitverschiebungsoperation;
einer Operation der Form $f(z)=2^z$;
einer elementweisen Multiplikationsoperation;

einem ersten Nachschlagen (540) in einer ersten Nachschlagetabelle, LUT, wobei die erste LUT eine Sigmoidfunktion umfasst;
einem zweiten Nachschlagen (545) in einer zweiten LUT, wobei die zweite LUT eine Reziprokfunktion umfasst;
einem dritten Nachschlagen in einer dritten LUT, wobei die dritte LUT ein Reziproke einer Sigmoidfunktion umfasst;
einem vierten Nachschlagen in einer vierten LUT, wobei die vierte LUT eine Funktion $f(z)=2^z$ umfasst, wobei z ein Wert in dem Bereich (0, 1) ist;

einer lokalen Reaktionsnormalisierung (550); und
einer Faltungsoperation (570);

wobei die Exponentialoperation der Mehrzahl elementarer neuronaler Netzwerkoperationen zugeordnet ist, die implementiert: eine Negation (132), angewendet auf Eingabewerte, um negierte Eingabewerte zu erzeugen, wobei die Negation (132) ist: Ausgewertet durch die elementweise Subtraktionsoperation (532) unter Verwendung einer elementweisen Operationseinheit (285) des Hardwarebeschleunigers, oder Durchgeführt durch eine Aktivierungseinheit (255) des Hardwarebeschleunigers durch Laden der Funktion y=-x in eine LUT; oder

Durchgeführt durch Ändern eines Vorzeichenbits jedes Elements des Tensors;
eines von A oder B:

A. eine Sigmoidfunktion (134), angewendet auf die negierten Eingabewerte, um sigmoidale negierte Werte zu erzeugen, wobei die Sigmoidfunktion (134) durch das erste Nachschlagen (540) in der ersten LUT unter Verwendung der Aktivierungseinheit (255) des Hardwarebeschleunigers ausgewertet wird; und

eine Reziprokoperation (136), angewendet auf die sigmoiden negierten Werte, um reziproke sigmoide Werte zu erzeugen, wobei die Reziprokoperation (136) ausgewertet wird durch eines von: dem zweiten Nachschlagen (545) in der zweiten LUT, unter Verwendung der Aktivierungseinheit (255) des Hardwarebeschleunigers;
der lokalen Reaktionsnormalisierung (550) unter Verwendung einer lokalen Reaktionsnormalisierungseinheit (265) des Hardwarebeschleunigers; und
der elementweisen Divisionsoperation (590) unter Verwendung der elementweisen Operationseinheit (285) des Hardwarebeschleunigers; oder

B. einer reziproken Sigmoidfunktion, angewendet auf die negierten Eingabewerte, um reziproke sigmoide negierte Werte zu erzeugen, wobei die reziproke Sigmoidfunktion (134) durch das dritte Nachschlagen (540) in der dritten LUT unter Verwendung der Aktivierungseinheit (255) des Hardwarebeschleunigers ausgewertet wird; und

einer Addition oder Subtraktion (138), angewendet auf die reziproken Sigmoidwerte, um eine Konstante von den reziproken Sigmoidwerten zu subtrahieren und dadurch Ausgabewerte der Exponentialoperation zu erzeugen, wobei die Addition oder Subtraktion (138) durch die elementweise Additions- (560) oder elementweise Subtraktionsoperation (532) unter Verwendung der Aktivierungseinheit (255) des Hardwarebeschleunigers oder unter Verwendung der elementweisen Operationseinheit (285) des Hardwarebeschleunigers ausgewertet wird; oder wobei die Addition oder Subtraktion (138) eine Subtraktion ist und durch die Faltungsoperation (570) unter Verwendung einer oder mehrerer Faltungs-Engines (240) des Hardwarebeschleunigers ausgewertet wird.

2. Verfahren für ein Implementieren einer Softmax-Schicht des neuronalen Netzwerkes durch einen Hardwarebeschleuniger mit einer Festfunktionsschaltung, die dazu eingerichtet ist, einen Satz von verfügbaren elementaren neuronalen Netzwerkoperationen auszuführen, das Verfahren umfassend:

Empfangen (311) einer Definition von mindestens einer Softmax-Schicht des neuronalen Netzwerkes;
Zuordnen (321) der Softmax-Schicht des neuronalen Netzwerkes zu einer Darstellung, umfassend eine Mehrzahl von elementaren neuronalen Netzwerkoperationen aus dem Satz der verfügbaren elementaren neuronalen Netzwerkoperationen; und
Auswerten (331) der Mehrzahl von elementaren neuronalen Netzwerkoperationen,
wobei jede der Mehrzahl von elementaren neuronalen Netzwerkoperationen aus einer Liste ausgewählt ist, bestehend aus:

einer Transponierungs- oder Permutierungsoperation (510, 512);
einer maximalen Pooling-Operation (520);
einer elementweisen Maximumoperation (610);
einer elementweisen Subtraktionsoperation (530, 532);
einer elementweisen Negationsoperation;
einer elementweisen Additionsoperation (560);
einer elementweisen Divisionsoperation (590);
einer elementweisen Multiplikationsoperation (580);
einer elementweisen Bitverschiebungsoperation;
eine Operation $f(z)=2^z$;
einer Faltungsoperation (570);
einer Funktionsannäherungsoperation, umfassend ein Nachschlagen in einer von:

einer ersten Nachschlagetabelle (LUT), umfassend eine Sigmoidfunktion;
einer zweiten LUT, umfassend eine Reziprokfunktion;

einer dritten LUT, umfassend ein Reziproke einer Sigmoidfunktion;

einer vierten LUT, umfassend die Funktion $f(z)=2^z$, wobei z ein Wert in dem Bereich (0,1) ist; und einer fünften LUT, umfassend eine Exponentialfunktion; und

einer lokale Reaktionsnormalisierung (550, 552), wobei:

A. die Softmax-Schicht des neuronalen Netzwerks der Mehrzahl der elementaren neuronalen Netzwerkoperationen zugeordnet ist, die implementiert:

eine Maximumoperation (110), angewendet auf Eingabewerte, um das Maximum unter den Eingabewerten zu erhalten, wobei die Maximumoperation (110) durch eines ausgewertet wird von:

der maximalen Pooling-Operation (520) unter Verwendung einer Pooling-Einheit (275) des Hardwarebeschleunigers; und
der elementweisen Maximumoperation (610) unter Verwendung einer elementweisen Operationseinheit (285) des Hardwarebeschleunigers;

einer ersten Subtraktion (120), die das Maximum von jedem der Eingabewerte subtrahiert, um negativ verschobene Eingabewerte zu erzeugen, wobei die erste Subtraktion ausgewertet wird durch:

die elementweise Subtraktionsoperation (530) unter Verwendung der elementweisen Operationseinheit (285) des Hardwarebeschleunigers oder einer Aktivierungseinheit (255) des Hardwarebeschleunigers; oder
die Faltungsoperation (570) unter Verwendung einer oder mehrerer Faltungs-Engines (240) des Hardwarebeschleunigers;

eine Exponentialoperation (130), die die Funktion $f(x) = e^x$ implementiert und auf die negativ verschobenen Eingabewerte angewendet wird, um potenzierte Werte zu erzeugen, wobei die Exponentialoperation ausgewertet wird:

direkt durch das Nachschlagen in der fünften LUT unter Verwendung der Aktivierungseinheit (255) des Hardwarebeschleunigers; oder
unter Verwendung des Verfahrens nach Anspruch 1; oder durch Verwenden der elementweisen Multiplikationsoperation (580), für ein Auswerten des Produkts kx unter Verwendung der elementweisen Operationseinheit (285) des Hardwarebeschleunigers, wobei $k=\log_2 e$ ist, und Erhöhen von 2 auf die Potenz des Produkts kx, wobei Erhöhen von 2 auf die Potenz des Produkts kx implementiert wird unter Verwendung von:

der elementweisen Bitverschiebungsoperation für ein Auswerten des ganzzahligen Teils der Potenz, dem Nachschlagen in der vierten LUT für ein Auswerten des nicht-ganzzahligen Teils der Potenz unter Verwendung der Aktivierungseinheit (255) des Hardwarebeschleunigers und der elementweisen Multiplikationsoperation (580) unter Verwendung der elementweisen Operationseinheit (285) des Hardwarebeschleunigers für ein Kombinieren der ganzzahligen und nicht ganzzahligen Teile der Potenz; oder
einer Festfunktionseinheit des Hardwarebeschleunigers für ein Auswerten der Operation $f(z)=2^z$;

einer Summierung (140), angewendet auf die potenzierten Werte, um eine Summe der potenzierten Werte zu erzeugen, wobei die Summierung (140) ausgewertet wird durch eines von:

iterierten paarweisen Additionsoperationen, implementiert durch die elementweise Operationseinheit (285) des Hardwarebeschleunigers; und
der Faltungsoperation (570), unter Verwendung einer oder mehrerer einer Mehrzahl von Faltungs-Engines (240) des Hardwarebeschleunigers; und

eine Division (150), die jeden der potenzierten Werte durch die Summe der potenzierten Werte dividiert, wobei die Division (150) durch eines ausgewertet wird von:

der elementweisen Divisionsoperation (590) unter Verwendung der elementweisen Operationseinheit (285) des Hardwarebeschleunigers;

der lokalen Reaktionsnormalisierung (552) unter Verwendung einer lokalen Reaktionsnormalisierungseinheit (265) des Hardwarebeschleunigers, und der elementweisen Multiplikationsoperation (580) unter Verwendung der elementweisen Operationseinheit (285) des Hardwarebeschleunigers;

dem Nachschlagen in der zweiten LUT unter Verwendung der Aktivierungseinheit (255) des Hardwarebeschleunigers und der elementweisen Multiplikationsoperation (580) unter Verwendung der elementweisen Operationseinheit (285) des Hardwarebeschleunigers; oder

B. wobei die Softmax-Schicht des neuronalen Netzwerks auf Eingabedaten anzuwenden ist, umfassend ein erstes Element und ein zweites Element, und wobei die Mehrzahl von elementaren neuronalen Netzwerkoperationen implementiert:

mindestens eine Subtraktion, um mindestens eine Differenz zwischen dem ersten Element und dem zweiten Element zu erhalten, wobei die mindestens eine Subtraktion durch eines Ausgewertet wird von:

der elementweisen Subtraktionsoperation (530) unter Verwendung der elementweisen Operationseinheit (285) des Hardwarebeschleunigers; oder
der Faltungsoperation (570) unter Verwendung der einen oder mehreren Faltungs-Engines (240) des Hardwarebeschleunigers; und

einer Sigmoidfunktion, angewendet auf die mindestens eine Differenz, um eine Ausgabe der Softmax-Schicht zu erzeugen, wobei die Sigmoidfunktion (134) durch das Nachschlagen in der ersten LUT unter Verwendung der Aktivierungseinheit (255) des Hardwarebeschleunigers ausgewertet wird.

3.  Datenverarbeitungssystem (10) für ein Implementieren einer Exponentialoperation, das System umfassend:

einen Hardwarebeschleuniger (200), umfassend eine Festfunktionsschaltung, die dazu eingerichtet ist, einen Satz verfügbarer elementarer neuronaler Netzwerkoperationen auszuführen, wobei der Hardwarebeschleuniger (200) eine beliebige eine von oder eine beliebige Kombination von zwei oder mehr umfasst von:

einer Aktivierungseinheit (255), umfassend eine LUT;
einer lokalen Reaktionsnormalisierungseinheit (265), die dazu eingerichtet ist, eine lokale Reaktionsnormalisierung durchzuführen;
einer elementweisen Operationseinheit (285), die dazu eingerichtet ist, eine ausgewählte Operation auf jedes Paar entsprechender Elemente von zwei Tensoren identischer Größe anzuwenden; und
einer oder mehrerer Faltungs-Engines (240), die dazu eingerichtet sind, Faltungsoperationen auszuführen; und einer Steuerung (15), die eingerichtet ist für ein:

Empfangen (310) einer Definition von mindestens einer neuronalen Netzwerkschicht umfassend die Exponentialoperation; und
Zuordnen (320) der neuronalen Netzwerkschicht zu einer Darstellung, umfassend eine Mehrzahl von elementaren neuronalen Netzwerkoperationen aus dem Satz der verfügbaren elementaren neuronalen Netzwerkoperationen,

wobei der Hardwarebeschleuniger (200) dazu eingerichtet ist, die Mehrzahl von elementaren neuronalen Netzwerkoperationen auszuwerten (330), und
wobei jede der Mehrzahl von elementaren neuronalen Netzwerkoperationen aus einer Liste ausgewählt ist, bestehend aus:

einer elementweisen Negations- oder Subtraktionsoperation (532);
einer elementweisen Additionsoperation (560);
einer elementweisen Divisionsoperation (590);
einer elementweisen Bitverschiebungsoperation;
einer Operation der Form $f(z)=2^z$;

einer elementweisen Multiplikationsoperation;

einem ersten Nachschlagen (540) in einer ersten LUT, wobei die erste LUT eine Sigmoidfunktion umfasst;

einem zweiten Nachschlagen (545) in einer zweiten LUT, wobei die zweite LUT eine Reziprokfunktion umfasst;

einem dritten Nachschlagen in einer dritten LUT, wobei die dritte LUT ein Reziproke einer Sigmoidfunktion umfasst;

einem vierten Nachschlagen in einer vierten LUT, wobei die vierte LUT eine Funktion $f(z)=2^z$ umfasst, wobei z ein Wert in dem Bereich (0, 1) ist;

einer lokalen Reaktionsnormalisierung (550); und
einer Faltungsoperation (570);

wobei die Exponentialoperation einer Teilmenge der Mehrzahl von elementaren neuronalen Netzwerkoperationen zugeordnet ist, die implementieren:

eine Negation (132), angewendet auf Eingabewerte, um negierte Eingabewerte zu erzeugen, wobei die Negation (132) ist:

Ausgewertet durch die elementweise Subtraktionsoperation (532) unter Verwendung der elementweisen Operationseinheit (285) des Hardwarebeschleunigers, oder
Durchgeführt durch die Aktivierungseinheit (255) des Hardwarebeschleunigers durch Laden der Funktion y=-x in eine LUT; oder

Durchgeführt durch Ändern eines Vorzeichenbits jedes Elements des Tensors; eines von A oder B:

A. eine Sigmoidfunktion (134), angewendet auf die negierten Eingabewerte, um sigmoidale negierte Werte zu erzeugen, wobei die Sigmoidfunktion (134) durch das erste Nachschlagen (540) in der ersten LUT unter Verwendung der Aktivierungseinheit (255) des Hardwarebeschleunigers ausgewertet wird; und

eine Reziprokoperation (136), angewendet auf die sigmoiden negierten Werte, um reziproke sigmoide Werte zu erzeugen, wobei die Reziprokoperation (136) ausgewertet wird durch eines von: dem zweiten Nachschlagen in der zweiten LUT, unter Verwendung der Aktivierungseinheit (255) des Hardwarebeschleunigers;
der lokalen Reaktionsnormalisierung (550) unter Verwendung der lokalen Reaktionsnormalisierungseinheit (265) des Hardwarebeschleunigers; und
der elementweisen Divisionsoperation unter Verwendung der elementweisen Operationseinheit (285) des Hardwarebeschleunigers; oder

B. einer reziproken Sigmoidfunktion, angewendet auf die negierten Eingabewerte, um reziproke sigmoide negierte Werte zu erzeugen, wobei die reziproke Sigmoidfunktion (134) durch das dritte Nachschlagen (540) in der dritten LUT unter Verwendung der Aktivierungseinheit (255) des Hardwarebeschleunigers ausgewertet wird; und

einer Addition oder Subtraktion (138), angewendet auf die reziproken Sigmoidwerte, um eine Konstante von den reziproken Sigmoidwerten zu subtrahieren und dadurch Ausgabewerte der Exponentialoperation zu erzeugen, wobei die Addition oder Subtraktion (138) durch die elementweise Addition (560) oder elementweise Subtraktion unter Verwendung der Aktivierungseinheit (255) des Hardwarebeschleunigers oder unter Verwendung der elementweisen Operationseinheit (285) des Hardwarebeschleunigers ausgewertet wird; oder wobei die Addition oder Subtraktion (138) eine Subtraktion ist und durch die Faltungsoperation (570) unter Verwendung einer oder mehrerer Faltungs-Engines (240) des Hardwarebeschleunigers ausgewertet wird.

4. Datenverarbeitungssystem für ein Implementieren einer Softmax-Schicht des neuronalen Netzwerkes, das System umfassend:

einen Hardwarebeschleuniger (200), umfassend eine Festfunktionsschaltung, die dazu eingerichtet ist, einen Satz verfügbarer elementarer neuronaler Netzwerkoperationen auszuführen, wobei der Hardwarebeschleuniger (200) eine beliebige eine von oder eine beliebige Kombination von zwei oder mehr umfasst von:

einer Aktivierungseinheit (255), umfassend eine Nachschlagetabelle (LUT) und/oder dazu eingerichtet, den gleichen Wert von jedem Element eines Tensors zu subtrahieren;
einer lokalen Reaktionsnormalisierungseinheit (265), die dazu eingerichtet ist, eine lokale Reaktionsnormalisierung durchzuführen;
einer elementweisen Operationseinheit (285), die dazu eingerichtet ist, eine ausgewählte Operation auf jedes Paar entsprechender Elemente von zwei Tensoren identischer Größe anzuwenden;
einer Festfunktionseinheit, die dazu eingerichtet ist, eine Operation der Form $f(z) = 2^z$ durchzuführen;
einer oder mehrerer Faltungs-Engines (240), die dazu eingerichtet sind, Faltungsoperationen durchzuführen; und einer Pooling-Einheit (275), die dazu eingerichtet ist, Pooling-Operationen, einschließlich Max-Pooling, durchzuführen; und

einer Steuerung (15), die eingerichtet ist für ein:

Empfangen (311) einer Definition von mindestens einer Softmax-Schicht des neuronalen Netzwerkes; und Zuordnen (321) der Softmax-Schicht des neuronalen Netzwerkes auf eine Darstellung, umfassend eine Mehrzahl von elementaren neuronalen Netzwerkoperationen aus dem Satz der verfügbaren elementaren neuronalen Netzwerkoperationen,
wobei der Hardwarebeschleuniger (200) dazu eingerichtet ist, die Mehrzahl von elementaren neuronalen Netzwerkoperationen auszuwerten (331), und
wobei jede der Mehrzahl von elementaren neuronalen Netzwerkoperationen aus der Liste ausgewählt ist, bestehend aus:

einer Transponierungs- oder Permutierungsoperation (510, 512);
einer maximalen Pooling-Operation (520);
einer elementweisen Maximumoperation;
einer elementweisen Subtraktionsoperation (530, 532);
einer elementweisen Negationsoperation;
einer elementweisen Additionsoperation (560);
einer elementweisen Divisionsoperation;
einer elementweisen Multiplikationsoperation (580);
einer elementweisen Bitverschiebungsoperation;
eine Operation $f(z)=2^z$;
einer Faltungsoperation (570);

einer Funktionsannäherungsoperation, umfassend ein Nachschlagen in einer von:

einer ersten LUT, umfassend eine Sigmoidfunktion;
einer zweiten LUT, umfassend eine Reziprokfunktion;
einer dritten LUT, umfassend ein Reziproke einer Sigmoidfunktion;
einer vierten LUT, umfassend die Funktion $f(z)=2^z$, wobei z ein Wert in dem Bereich (0,1) ist; und
einer fünften LUT, umfassend eine Exponentialfunktion; und

einer lokalen Reaktionsnormalisierung (550, 552);

wobei:

A. die Softmax-Schicht des neuronalen Netzwerks der Mehrzahl der elementaren neuronalen Netzwerkoperationen zugeordnet ist, die implementiert:

eine Maximumoperation (110), angewendet auf Eingabewerte, um das Maximum unter den Eingabewerten zu erhalten, wobei die Maximumoperation (110) durch eines ausgewertet wird von:

der maximalen Pooling-Operation (520) unter Verwendung der Pooling-Einheit (275) des Hardwarebeschleunigers; und
der elementweisen Maximumoperation (610) unter Verwendung der elementweisen Operationseinheit (285) des Hardwarebeschleunigers;

einer ersten Subtraktion (120), die das Maximum von jedem der Eingabewerte subtrahiert, um negativ verschobene Eingabewerte zu erzeugen, wobei die erste Subtraktion ausgewertet wird durch:

die elementweise Subtraktionsoperation (530) unter Verwendung der elementweisen Operationseinheit (285) des Hardwarebeschleunigers oder der Aktivierungseinheit (255) des Hardwarebeschleunigers; oder
der Faltungsoperation (571) unter Verwendung der einen oder mehreren Faltungs-Engines (240) des Hardwarebeschleunigers; und; eine Exponentialoperation (130), die die Funktion f (x) =$e_x$ implementiert und auf die negativ verschobenen Eingabewerte angewendet wird, um potenzierte Werte zu erzeugen, wobei die Exponentialoperation ausgewertet wird:

direkt durch das Nachschlagen in der fünften LUT unter Verwendung der Aktivierungseinheit (255) des Hardwarebeschleunigers; oder
unter Verwendung des Verfahrens nach Anspruch 1; oder

durch Verwenden der elementweisen Multiplikationsoperation (580), für ein Auswerten des Produkts kx unter Verwendung der elementweisen Operationseinheit (285) des Hardwarebeschleunigers, wobei k=$\log_2 e$ ist, und Erhöhen von 2 auf die Potenz des Produkts kx, wobei Erhöhen von 2 auf die Potenz des Produkts kx implementiert wird unter Verwendung von:

der elementweisen Bitverschiebungsoperation für ein Auswerten des ganzzahligen Teils der Potenz, dem Nachschlagen in der vierten LUT für ein Auswerten des nicht-ganzzahligen Teils der Potenz unter Verwendung der Aktivierungseinheit (255) des Hardwarebeschleunigers und der elementweisen Multiplikationsoperation (580) unter Verwendung der elementweisen Operationseinheit (285) des Hardwarebeschleunigers für ein Kombinieren der ganzzahligen und nicht ganzzahligen Teile der Potenz; oder
unter Verwendung einer Festfunktionseinheit des Hardwarebeschleunigers für ein Auswerten der Operation f(z)=$2^z$;

einer Summierung (140), angewendet auf die potenzierten Werte, um eine Summe der potenzierten Werte zu erzeugen, wobei die Summierung (140) ausgewertet wird durch eines von:

iterierten paarweisen Additionsoperationen, implementiert durch die elementweise Operationseinheit (285) des Hardwarebeschleunigers; und
der Faltungsoperation (570) unter Verwendung der einen oder mehreren Faltungs-Engines (240) des Hardwarebeschleunigers; und

eine Division (150), die jeden der potenzierten Werte durch die Summe der potenzierten Werte dividiert, wobei die Division (150) durch eines ausgewertet wird von:

der elementweisen Divisionsoperation (590) unter Verwendung der elementweisen Operationseinheit (285) des Hardwarebeschleunigers;
der lokalen Reaktionsnormalisierung (552) unter Verwendung der lokalen Reaktionsnormalisierungseinheit (265) des Hardwarebeschleunigers, und der elementweisen Multiplikationsoperation (580) unter Verwendung der elementweisen Operationseinheit (285) des Hardwarebeschleunigers;
dem Nachschlagen in der zweiten LUT unter Verwendung der Aktivierungseinheit (255) des Hardwarebeschleunigers und
der elementweisen Multiplikationsoperation (580) unter Verwendung der elementweisen Operationseinheit (285) des Hardwarebeschleunigers; oder

B. wobei die Softmax-Schicht des neuronalen Netzwerks auf Eingabedaten anzuwenden ist, umfassend ein erstes Element und ein zweites Element, und wobei die Mehrzahl von elementaren neuronalen Netzwerkoperationen implementiert:

mindestens eine Subtraktion, um mindestens eine Differenz zwischen dem ersten Element und dem zweiten Element zu erhalten, wobei die mindestens eine Subtraktion durch eines Ausgewertet wird von:

der elementweisen Subtraktionsoperation (530) unter Verwendung einer elementweisen Operationseinheit (285) des Hardwarebeschleunigers; oder
der Faltungsoperation (570) unter Verwendung der einen oder mehreren Faltungs-Engines (240) des Hardwarebeschleunigers; und

einer Sigmoidfunktion, angewendet auf die mindestens eine Differenz, um eine Ausgabe der Softmax-Schicht zu erzeugen, wobei die Sigmoidfunktion (134) durch das Nachschlagen in der ersten LUT unter Verwendung der Aktivierungseinheit (255) des Hardwarebeschleunigers ausgewertet wird.

5. Verfahren zur Herstellung eines Datenverarbeitungssystems nach einem der Ansprüche 3 bis 4 unter Verwendung eines Herstellungssystems für integrierte Schaltungen, das Verfahren umfassend: Verarbeiten einer computerlesbaren Beschreibung des Datenverarbeitungssystems nach einem der Ansprüche 3 bis 4 unter Verwendung eines Layoutverarbeitungssystems, um eine Schaltungslayoutbeschreibung einer integrierten Schaltung zu erzeugen, die das Datenverarbeitungssystem nach einem der Ansprüche 3 bis 4 verkörpert; und Herstellen des Datenverarbeitungssystems nach einem der Ansprüche 3 bis 4 unter Verwendung eines Herstellungssystems für integrierte Schaltungen gemäß der Schaltungslayoutbeschreibung.

6. Computerlesbares Speichermedium mit einer darauf gespeicherten computerlesbaren Beschreibung eines Datenverarbeitungssystems nach einem der Ansprüche 3 bis 4, das, wenn es in einem Herstellungssystem für integrierte Schaltungen verarbeitet wird, das Herstellungssystem für integrierte Schaltungen veranlasst zu einem:

Verarbeiten der computerlesbaren Beschreibung des Datenverarbeitungssystems nach einem der Ansprüche 3 bis 4 unter Verwendung eines Layoutverarbeitungssystems, um eine Schaltungslayoutbeschreibung einer integrierten Schaltung zu erzeugen, die das Datenverarbeitungssystem nach einem der Ansprüche 3 bis 4 verkörpert; und
Herstellen des Datenverarbeitungssystems nach einem der Ansprüche 3 bis 4 unter Verwendung eines Erzeugungssystems für integrierte Schaltungen gemäß der Schaltungslayoutbeschreibung.

7. Herstellungssystem für integrierte Schaltungen, umfassend:

ein nichtflüchtiges, computerlesbares Speichermedium mit einer darauf gespeicherten, computerlesbaren Beschreibung eines Datenverarbeitungssystems nach einem der Ansprüche 3 bis 4;
ein Layoutverarbeitungssystem, das dazu eingerichtet ist, die computerlesbare Beschreibung zu verarbeiten, um eine Schaltungslayoutbeschreibung einer integrierten Schaltung zu erzeugen, die das Datenverarbeitungssystem nach einem der Ansprüche 3 bis 4 verkörpert, und
ein Erzeugungssystem für integrierte Schaltungen, das dazu eingerichtet ist, das Datenverarbeitungssystem nach einem der Ansprüche 3 bis 4 gemäß der Schaltungslayoutbeschreibung herzustellen.

## Revendications

1. Procédé de mise en œuvre d'une opération exponentielle par un accélérateur matériel comprenant une circuiterie à fonction fixe configurée pour réaliser un ensemble d'opérations élémentaires de réseau neuronal disponibles, le procédé comprenant :

la réception (310) d'une définition d'au moins une couche de réseau neuronal comprenant l'opération exponentielle ;
le mappage (320) de la couche de réseau neuronal avec une représentation comprenant une pluralité d'opérations élémentaires de réseau neuronal à partir de l'ensemble d'opérations élémentaires de réseau neuronal disponibles ; et
l'évaluation (330) de la pluralité d'opérations élémentaires de réseau neuronal,
dans lequel chacune de la pluralité d'opérations élémentaires de réseau neuronal est sélectionnée à partir d'une liste constituée :

d'une opération de soustraction ou de négation par élément (532) ;
d'une opération d'addition par élément (560) ;

d'une opération de division par élément (590) ;
d'une opération de décalage de bits par élément ;
d'une opération de la forme $f(z)=2^z$ ;
d'une opération de multiplication par élément ;

une première consultation (540) dans une première table de consultation, LUT, dans lequel la première LUT comprend une fonction sigmoïde ;
une deuxième consultation (545) dans une deuxième LUT, dans lequel la deuxième LUT comprend une fonction réciproque ;
une troisième consultation dans une troisième LUT, dans lequel la troisième LUT comprend une réciproque d'une fonction sigmoïde ;
une quatrième consultation dans une quatrième LUT, dans lequel la quatrième LUT comprend une fonction $f(z)=2^z$, où z est une valeur dans la plage (0, 1) ;

une normalisation de réponse locale (550) ; et
une opération de convolution (570) ;

dans lequel l'opération exponentielle est mappée sur la pluralité d'opérations élémentaires de réseau neuronal qui met en œuvre : une négation (132), appliqué aux valeurs d'entrée, pour produire des valeurs d'entrée inversées, dans lequel la négation (132) est : évaluée par l'opération de soustraction par élément (532), en utilisant une unité d'opérations par élément (285) de l'accélérateur matériel, ou exécutée par une unité d'activation (255) de l'accélérateur matériel en chargeant la fonction y=-x dans une LUT ; ou réalisée en changeant un bit de signe de chaque élément du tenseur ;
l'un parmi A ou B :

A. une fonction sigmoïde (134), appliquée aux valeurs d'entrée inversées, pour produire des valeurs sigmoïdes inversées, dans lequel la fonction sigmoïde (134) est évaluée par la première consultation (540) dans la première LUT, en utilisant l'unité d'activation (255) de l'accélérateur matériel ; et

une opération réciproque (136), appliquée aux valeurs sigmoïdes inversées, pour produire des valeurs sigmoïdes réciproques, dans lequel l'opération réciproque (136) est évaluée par l'une parmi : la deuxième consultation (545) dans la deuxième LUT, en utilisant l'unité d'activation (255) de l'accélérateur matériel ;
la normalisation de réponse locale (550), en utilisant une unité de normalisation de réponse locale (265) de l'accélérateur matériel ; et
l'opération de division par élément (590), en utilisant l'unité d'opérations par élément (285) de l'accélérateur matériel ; ou

B. une fonction sigmoïde réciproque, appliquée aux valeurs d'entrée inversées, pour produire des valeurs sigmoïdes réciproques inversées, dans lequel la fonction sigmoïde réciproque (134) est évaluée par la troisième consultation (540) dans la troisième LUT, en utilisant l'unité d'activation (255) de l'accélérateur matériel ; et

une addition ou soustraction (138), appliqué aux valeurs sigmoïdes réciproques, pour soustraire une constante des valeurs sigmoïdes réciproques et produire ainsi des valeurs de sortie de l'opération exponentielle, dans lequel l'addition ou la soustraction (138) est évaluée par l'opération d'addition par élément (560) ou de soustraction par élément (532), en utilisation de l'unité d'activation (255) de l'accélérateur matériel ou en utilisant l'unité d'opérations par élément (285) de l'accélérateur matériel ; ou dans lequel l'addition ou la soustraction (138) est une soustraction et est évaluée par l'opération de convolution (570), en utilisant un ou plusieurs moteurs de convolution (240) de l'accélérateur matériel.

2. Procédé de mise en œuvre d'une couche de réseau neuronal softmax par un accélérateur matériel comprenant une circuiterie à fonction fixe configurée pour réaliser un ensemble d'opérations élémentaires de réseau neuronal disponibles, le procédé comprenant :

la réception (311) d'une définition d'au moins une couche de réseau neuronal softmax ;
la mappage (321) de la couche de réseau neuronal softmax avec une représentation comprenant une pluralité d'opérations élémentaires de réseau neuronal à partir de l'ensemble d'opérations élémentaires de réseau neuronal disponibles ; et

l'évaluation (331) de la pluralité d'opérations élémentaires de réseau neuronal,

dans lequel chacune de la pluralité d'opérations élémentaires de réseau neuronal est sélectionnée à partir d'une liste constituée :

d'une opération de transposition ou de permutation (510, 512) ;
d'une opération de regroupement max (520) ;
d'une opération de maximum par élément (610) ;
d'une opération de soustraction par élément (530, 532) ;
d'une opération de négation par élément ;
d'une opération d'addition par élément (560) ;
d'une opération de division par élément (590) ;
d'une opération de multiplication par élément (580) ;
d'une opération de décalage de bits par élément ;
d'une opération $f(z)=2^z$
d'une opération de convolution (570) ;
d'une opération d'approximation de fonction, comprenant une consultation dans l'une quelconque parmi :

une première table de consultation (LUT) comprenant une fonction sigmoïde ;
une deuxième LUT comprenant une fonction réciproque ; une troisième LUT comprenant une réciproque d'une fonction sigmoïde ;
une quatrième LUT comprenant la fonction $f(z)=2^z$, où z est une valeur dans la plage (0,1) ; et
une cinquième LUT comprenant une fonction exponentielle ; et

d'une normalisation de réponse locale (550, 552), dans lequel :

A. la couche de réseau neuronal softmax est mappée sur la pluralité d'opérations élémentaires de réseau neuronal, qui met en œuvre :

une opération de maximum (110), appliquée à des valeurs d'entrée, pour obtenir le maximum parmi les valeurs d'entrée, dans lequel l'opération de maximum (110) est évaluée par l'une parmi :

l'opération de regroupement max (520), en utilisant une unité de regroupement (275) de l'accélérateur matériel ; et
l'opération de maximum par élément (610), en utilisant une unité d'opérations par élément (285) de l'accélérateur matériel ;

une première soustraction (120), soustrayant le maximum de chacune des valeurs d'entrée, pour produire des valeurs d'entrée décalées négativement, dans lequel la première soustraction est évaluée par :

l'opération de soustraction par élément (530), en utilisant l'unité d'opérations par élément (285) de l'accélérateur matériel ou une unité d'activation (255) de l'accélérateur matériel ; ou
l'opération de convolution (570), en utilisant un ou plusieurs moteurs de convolution (240) de l'accélérateur matériel ;

une opération exponentielle (130) mettant en œuvre la fonction $f(x)=e^x$, appliquée aux valeurs d'entrée décalées négativement, pour produire des valeurs exponentielles, dans lequel l'opération exponentielle est évaluée :

directement par la consultation dans la cinquième LUT, en utilisant l'unité d'activation (255) de l'accélérateur matériel ; ou
en utilisant le procédé selon la revendication 1 ; ou

par l'utilisation de l'opération de multiplication par élément (580) pour évaluer le produit kx en utilisant l'unité d'opérations par élément (285) de l'accélérateur matériel, où $k = \log_2 e$, et en augmentant 2 à la puissance du produit kx, dans lequel l'augmentation 2 à la puissance du produit kx est mise en œuvre en utilisant :

l'opération de décalage de bits par élément pour évaluer la partie entière de la puissance, la consultation dans la quatrième LUT pour évaluer la partie non entière de la puissance en utilisant l'unité d'activation (255) de l'accélérateur matériel, et l'opération de multiplication par élément (580) en utilisant l'unité d'opérations par élément (285) de l'accélérateur matériel pour combiner les parties entière et non entière de la puissance ; ou

une unité à fonction fixe de l'accélérateur matériel pour évaluer l'opération $f(z)=2^z$ ;

une sommation (140), appliquée aux valeurs exponentielles, pour produire une somme des valeurs exponentielles, dans lequel la sommation (140) est évaluée par l'un parmi :

des opérations d'addition itérées par paires mises en œuvre par l'unité d'opérations par élément (285) de l'accélérateur matériel ; et

l'opération de convolution (570), en utilisant une pluralité de moteurs de convolution (240) de l'accélérateur matériel ; et

une division (150), divisant chacune des valeurs exponentiées par la somme des valeurs exponentiées, dans lequel la division (150) est évaluée par l'une parmi :

l'opération de division par élément (590), en utilisant l'unité d'opérations par élément (285) de l'accélérateur matériel ;

la normalisation de réponse locale (552) en utilisant une unité de normalisation de réponse locale (265) de l'accélérateur matériel, et l'opération de multiplication par élément (580) en utilisant l'unité d'opérations par élément (285) de l'accélérateur matériel ;

la consultation dans la deuxième LUT, en utilisant l'unité d'activation (255) de l'accélérateur matériel, et l'opération de multiplication par élément (580) en utilisant l'unité d'opérations par élément (285) de l'accélérateur matériel ; ou

B. dans lequel la couche de réseau neuronal softmax doit être appliquée à des données d'entrée comprenant un premier élément et un deuxième élément, et dans lequel la pluralité d'opérations élémentaires de réseau neuronal met en œuvre :

au moins une soustraction, pour obtenir au moins une différence entre le premier élément et le deuxième élément, dans lequel l'au moins une soustraction est évaluée par l'une parmi :

l'opération de soustraction par élément (530), en utilisant l'unité d'opérations par élément (285) de l'accélérateur matériel ; ou

l'opération de convolution (570), en utilisant les un ou plusieurs moteurs de convolution (240) de l'accélérateur matériel ; et

une fonction sigmoïde, appliquée à l'au moins une différence, pour produire une sortie de la couche softmax, dans lequel la fonction sigmoïde (134) est évaluée par la consultation dans la première LUT, en utilisant l'unité d'activation (255) de l'accélérateur matériel.

3. Système de traitement de données (10) pour mettre en œuvre une opération exponentielle, le système comprenant :

un accélérateur matériel (200), comprenant une circuiterie à fonction fixe configuré pour réaliser un ensemble d'opérations élémentaires de réseau neuronal disponibles, dans lequel l'accélérateur matériel (200) comprend l'un quelconque parmi, ou une combinaison quelconque de deux ou plus parmi :

une unité d'activation (255), comprenant une LUT ;

une unité de normalisation de réponse locale (265), configurée pour réaliser une normalisation de réponse locale ;

une unité d'opérations par élément (285), configurée pour appliquer une opération sélectionnée à chaque paire d'éléments respectifs de deux tenseurs de taille identique ; et

un ou plusieurs moteurs de convolution (240), configurés pour réaliser des opérations de convolution ; et

un contrôleur (15) configuré pour :

recevoir (310) une définition d'au moins une couche de réseau neuronal comprenant l'opération exponentielle ; et

mapper (320) la couche de réseau neuronal avec une représentation comprenant une pluralité d'opérations élémentaires de réseau neuronal à partir de l'ensemble d'opérations élémentaires de réseau neuronal disponibles,

dans lequel l'accélérateur matériel (200) est configuré pour évaluer (330) la pluralité d'opérations élémentaires de réseau neuronal, et

dans lequel chacune de la pluralité d'opérations élémentaires de réseau neuronal est sélectionnée à partir d'une liste constituée :

d'une opération de soustraction ou de négation par élément (532) ;
d'une opération d'addition par élément (560) ;
d'une opération de division par élément (590) ;
d'une opération de décalage de bits par élément ;
d'une opération de la forme $f(z)=2^z$ ;
d'une opération de multiplication par élément ;

une première consultation (540) dans une première LUT, dans lequel la première LUT comprend une fonction sigmoïde ;
une deuxième consultation (545) dans une deuxième LUT, dans lequel la deuxième LUT comprend une fonction réciproque ;
une troisième consultation dans une troisième LUT, dans lequel la troisième LUT comprend une réciproque d'une fonction sigmoïde ;
une quatrième consultation dans une quatrième LUT, dans lequel la quatrième LUT comprend une fonction $f(z)=2^2$, où z est une valeur dans la plage (0,1) ;

d'une normalisation de réponse locale (550) ; et
d'une opération de convolution (570) ;

dans lequel l'opération exponentielle est mappée sur un sousensemble de la pluralité d'opérations élémentaires de réseau neuronal mettant en œuvre :

une négation (132), appliquée à des valeurs d'entrée, pour produire des valeurs d'entrée inversées, dans lequel la négation (132) est :

évaluée par l'opération de soustraction par élément (532), en utilisant l'unité d'opérations par élément (285) de l'accélérateur matériel, ou
réalisée par l'unité d'activation (255) de l'accélérateur matériel en chargeant la fonction y=-x dans une LUT ; ou

réalisée en changeant un bit de signe de chaque élément du tenseur ; l'un parmi A ou B :

A. une fonction sigmoïde (134), appliquée aux valeurs d'entrée inversées, pour produire des valeurs sigmoïdes inversées, dans lequel la fonction sigmoïde (134) est évaluée par la première consultation (540) dans la première LUT, en utilisant l'unité d'activation (255) de l'accélérateur matériel ; et

une opération réciproque (136), appliquée aux valeurs sigmoïdes inversées, pour produire des valeurs sigmoïdes réciproques, dans lequel l'opération réciproque (136) est évaluée par l'une parmi : la deuxième consultation dans la deuxième LUT, en utilisant l'unité d'activation (255) de l'accélérateur matériel ;
la normalisation de réponse locale (550), en utilisant l'unité de normalisation de réponse locale (265) de l'accélérateur matériel ; et
l'opération de division par élément, en utilisant l'unité d'opérations par élément (285) de l'accélérateur matériel ; ou

B. une fonction sigmoïde réciproque, appliquée aux valeurs d'entrée inversées, pour produire des valeurs sigmoïdes réciproques inversées, dans lequel la fonction sigmoïde réciproque (134) est évaluée par la troisième consultation (540) dans la troisième LUT, en utilisant l'unité d'activation (255) de l'accélérateur matériel ; et

une addition ou soustraction (138), appliqué aux valeurs sigmoïdes réciproques, pour soustraire une constante des valeurs sigmoïdes réciproques et produire ainsi des valeurs de sortie de l'opération exponentielle, dans lequel l'addition ou la soustraction (138) est évaluée par une addition par élément (560) ou une soustraction par élément, en utilisation de l'unité d'activation (255) de l'accélérateur matériel ou en utilisant l'unité d'opérations par élément (285) de l'accélérateur matériel, ou dans lequel l'addition ou la soustraction (138) est une soustraction et est évaluée par l'opération de convolution (570), en utilisant un ou plusieurs moteurs de convolution (240) de l'accélérateur matériel.

4. Système de traitement de données pour mettre en œuvre une couche de réseau neuronal softmax, le système comprenant :

un accélérateur matériel (200), comprenant une circuiterie à fonction fixe configuré pour réaliser un ensemble d'opérations élémentaires de réseau neuronal disponibles, dans lequel l'accélérateur matériel (200) comprend l'un quelconque parmi, ou une combinaison quelconque de deux ou plus parmi :

une unité d'activation (255), comprenant une table de consultation (LUT) et/ou configurée pour soustraire la même valeur de chaque élément d'un tenseur ;
une unité de normalisation de réponse locale (265), configurée pour réaliser une normalisation de réponse locale ;
une unité d'opérations par élément (285), configurée pour appliquer une opération sélectionnée à chaque paire d'éléments respectifs de deux tenseurs de taille identique ;
une unité à fonction fixe, configurée pour réaliser une opération de la forme $f(z)=2^z$ ;
un ou plusieurs moteurs de convolution (240), configurés pour réaliser des opérations de convolution ; et une unité de regroupement (275), configurée pour réaliser des opérations de regroupement, incluant un regroupement max ; et

un contrôleur (15) configuré pour :

recevoir (311) une définition d'au moins une couche de réseau neuronal softmax ; et mapper (321) la couche de réseau neuronal softmax sur une représentation comprenant une pluralité d'opérations élémentaires de réseau neuronal à partir de l'ensemble d'opérations élémentaires de réseau neuronal disponibles,
dans lequel l'accélérateur matériel (200) est configuré pour évaluer (331) la pluralité d'opérations élémentaires de réseau neuronal, et
dans lequel chacune de la pluralité d'opérations élémentaires de réseau neuronal est sélectionnée à partir de la liste constituée :

d'une opération de transposition ou de permutation (510, 512) ;
d'une opération de regroupement max (520) ;
d'une opération de maximum par élément ;
d'une opération de soustraction par élément (530, 532) ;
d'une opération de négation par élément ;
d'une opération d'addition par élément (560) ;
d'une opération de division par élément ;
d'une opération de multiplication par élément (580) ;
d'une opération de décalage de bits par élément ;
d'une opération $f(z)=2^z$
d'une opération de convolution (570) ;

d'une opération d'approximation de fonction, comprenant une consultation dans l'une quelconque parmi :

une première LUT comprenant une fonction sigmoïde ;
une deuxième LUT comprenant une fonction réciproque ;
une troisième LUT comprenant une réciproque d'une fonction sigmoïde ;
une quatrième LUT comprenant la fonction $f(z)=2^z$, où z est une valeur dans la plage (0,1) ; et
une cinquième LUT comprenant une fonction exponentielle ; et

d'une normalisation de réponse locale (550, 552) ;

dans lequel :

A. la couche de réseau neuronal softmax est mappée sur la pluralité d'opérations élémentaires de réseau neuronal, qui met en œuvre :

une opération de maximum (110), appliquée à des valeurs d'entrée, pour obtenir le maximum parmi les valeurs d'entrée, dans lequel l'opération de maximum (110) est évaluée par l'une parmi :

l'opération de regroupement max (520), en utilisant l'unité de regroupement (275) de l'accélérateur matériel ; et
l'opération de maximum par élément (610), en utilisant l'unité d'opérations par élément (285) de l'accélérateur matériel ;

une première soustraction (120), soustrayant le maximum de chacune des valeurs d'entrée, pour produire des valeurs d'entrée décalées négativement, dans lequel la première soustraction est évaluée par :

l'opération de soustraction par élément (530), en utilisant l'unité d'opérations par élément (285) de l'accélérateur matériel ou l'unité d'activation (255) de l'accélérateur matériel ; ou
l'opération de convolution (571), en utilisant les un ou plusieurs moteurs de convolution (240) de l'accélérateur matériel ; une opération exponentielle (130) mettant en œuvre la fonction $f(x)=e_x$, appliquée aux valeurs d'entrée décalées négativement, pour produire des valeurs exponentielles, dans lequel l'opération exponentielle est évaluée :

directement par la consultation dans la cinquième LUT, en utilisant l'unité d'activation (255) de l'accélérateur matériel ; ou
en utilisant le procédé selon la revendication 1 ; ou

en utilisant l'opération de multiplication par élément (580) pour évaluer le produit kx en utilisant l'unité d'opérations par élément (285) de l'accélérateur matériel, où k = $\log_2 e$, et en augmentant 2 à la puissance du produit kx, dans lequel l'augmentation 2 à la puissance du produit kx est mise en œuvre en utilisant :

l'opération de décalage de bits par élément pour évaluer la partie entière de la puissance, la consultation dans la quatrième LUT pour évaluer la partie non entière de la puissance en utilisant l'unité d'activation (255) de l'accélérateur matériel, et l'opération de multiplication par élément (580) en utilisant l'unité d'opérations par élément (285) de l'accélérateur matériel pour combiner les parties entière et non entière de la puissance ; ou
en utilisant une unité à fonction fixe de l'accélérateur matériel pour évaluer l'opération $f(z)=2^z$ ;

une sommation (140), appliquée aux valeurs exponentielles, pour produire une somme des valeurs exponentielles, dans lequel la sommation (140) est évaluée par l'un parmi :

des opérations d'addition itérées par paires mises en œuvre par l'unité d'opérations par élément (285) de l'accélérateur matériel ; et
l'opération de convolution (570), en utilisant les un ou plusieurs moteurs de convolution (240) de l'accélérateur matériel ; et

une division (150), divisant chacune des valeurs exponentiées par la somme des valeurs exponentiées, dans lequel la division (150) est évaluée par l'une parmi :

l'opération de division par élément (590), en utilisant l'unité d'opérations par élément (285) de l'accélérateur matériel ;
la normalisation de réponse locale (552) en utilisant l'unité de normalisation de réponse locale (265) de l'accélérateur matériel, et l'opération de multiplication par élément (580) en utilisant l'unité d'opérations par élément (285) de l'accélérateur matériel ;

la consultation dans la deuxième LUT, en utilisant l'unité d'activation (255) de l'accélérateur matériel, et

l'opération de multiplication par élément (580) en utilisant l'unité d'opérations par élément (285) de l'accélérateur matériel ; ou

B. dans lequel la couche de réseau neuronal softmax doit être appliquée à des données d'entrée comprenant un premier élément et un deuxième élément, et dans lequel la pluralité d'opérations élémentaires de réseau neuronal met en œuvre :

au moins une soustraction, pour obtenir au moins une différence entre le premier élément et le deuxième élément, dans lequel l'au moins une soustraction est évaluée par l'une parmi :

l'opération de soustraction par élément (530), en utilisant une unité d'opérations par élément (285) de l'accélérateur matériel ; ou

l'opération de convolution (570), en utilisant les un ou plusieurs moteurs de convolution (240) de l'accélérateur matériel ; et

une fonction sigmoïde, appliquée à l'au moins une différence, pour produire une sortie de la couche softmax, dans lequel la fonction sigmoïde (134) est évaluée par la consultation dans la première LUT, en utilisant l'unité d'activation (255) de l'accélérateur matériel.

5. Procédé de fabrication, utilisant un système de fabrication de circuit intégré, système de traitement de données selon l'une quelconque des revendications 3 à 4, le procédé comprenant : le traitement, en utilisant un système de traitement d'implantation, d'une description lisible par ordinateur du système de traitement de données selon l'une quelconque des revendications 3 à 4 de manière à générer une description d'implantation de circuit d'un Circuit intégré incorporant le système de traitement de données selon l'une quelconque des revendications 3 à 4 ; et la fabrication, en utilisant un système de génération de circuit intégré, du système de traitement de données selon l'une quelconque des revendications 3 à 4 conformément à la description d'implantation de circuit.

6. Support de stockage lisible par ordinateur sur lequel est stockée une description lisible par ordinateur d'un système de traitement de données selon l'une quelconque des revendications 3 à 4 qui, lorsqu'il est traité dans un système de fabrication de circuit intégré, amène le système de fabrication de circuit intégré à :

traiter, en utilisant un système de traitement d'implantation, une description lisible par ordinateur du système de traitement de données selon l'une quelconque des revendications 3 à 4 de manière à générer une description d'implantation de circuit d'un circuit intégré incorporant le système de traitement de données selon l'une quelconque des revendications 3 à 4 ; et

fabriquer, en utilisant un système de génération de circuit intégré, le système de traitement de données selon l'une quelconque des revendications 3 à 4 conformément à la description d'implantation de circuit.

7. Système de fabrication de circuit intégré comprenant :

un support de stockage non transitoire lisible par ordinateur sur lequel est stockée une description lisible par ordinateur d'un système de traitement de données selon l'une quelconque des revendications 3 à 4 ;

un système de traitement d'implantation configuré pour traiter la description lisible par ordinateur de manière à générer une description d'implantation de circuit d'un circuit intégré incorporant le système de traitement de données selon l'une quelconque des revendications 3 à 4 et

un système de génération de circuit intégré configuré pour fabriquer le système de traitement de données selon l'une quelconque des revendications 3 à 4 conformément à la description d'implantation de circuit.

FIGURE 1A

$$x - M$$

| Negate | 132

$$-(x - M)$$

| Sigmoid | 134

$$\sigma(-(x - M))$$

| Reciprocal | 136

Constant

$$\frac{1}{\sigma(-(x - M))}$$

1

| Subtract | 138

$$\frac{1}{\sigma(-(x - M))} - 1$$

**FIGURE 1B**

**FIGURE 2**

**FIGURE 3**

**FIGURE 4**

FIGURE 5

**FIGURE 6A**

**FIGURE 6B**

$x$

Max ⟋‒110

$M = \max(x)$

**FIGURE 7A**

$x$

Split ⟋‒600

Element-wise max ⟋‒610

⋮

Split ⟋‒600

Element-wise max ⟋‒610

$M$

**FIGURE 7B**

601 ⟋ | x1 | x2 | x3 | x4 | $x$

600 ⟋

600 ⟋

602 ⟋ | x1 | x2 |

603 ⟋ | x3 | x4 |

610 ⟋

610

604 ⟋ | x1 | x4 |

600 ⟋

600

605 ⟋ | x1 |

606 ⟋ | x4 |

$M$

610 ⟋ | x4 |

**FIGURE 7C**

**FIGURE 7D**

$$M = \max(x)$$

**FIGURE 8**

$$e^{x-M}$$

140

Sum

$$\sum e^{x-M}$$

**FIGURE 9A**

$$e^{x-M}$$

Conv2d — 570

$$\sum e^{x-M}$$

**FIGURE 9B**

$$\sum e^{x-M} \longrightarrow \boxed{\text{Divide}} \quad \sim 150$$

$e^{x-M}$

$$\dfrac{e^{x-M}}{\sum e^{x-M}}$$

**FIGURE 10A**

$$\sum e^{x-M}$$

$$\boxed{\text{LRN}} \quad \sim 552$$

$$\dfrac{1}{\sum e^{x-M}}$$

$e^{x-M}$

$$580 \sim \boxed{\text{Multiply}}$$

$$\dfrac{e^{x-M}}{\sum e^{x-M}}$$

**FIGURE 10B**

$$\sum e^{x-M}$$

$$\boxed{\begin{array}{c}\text{Reciprocal LUT}\\ \text{lookup}\end{array}} \quad \sim 545$$

$$\dfrac{1}{\sum e^{x-M}}$$

$e^{x-M}$

$$580 \sim \boxed{\text{Multiply}}$$

$$\dfrac{e^{x-M}}{\sum e^{x-M}}$$

**FIGURE 10C**

FIGURE 11A

**FIGURE 11B**

$$\boldsymbol{x} = [a, b]$$

| Conv | $\sim$ 571 |

$$[a - b, b - a]$$

| Sigmoid LUT Lookup | $\sim$ 541 |

$$[\sigma(a - b), \sigma(b - a)]$$

**FIGURE 12**

**FIGURE 13**

**FIGURE 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190042922 A